# EUROPEAN PATENT APPLICATION

(11) **EP 4 207 875 A1**
(43) Date of publication of application: **05.07.2023**
(21) Application number: 21874419.1
(22) Date of filing: 27.09.2021
(51) Int. Cl.: H04W 36/00, H04W 36/16, H04W 36/24, H04W 52/02, H04L 1/16

(54) **ELECTRONIC DEVICE FOR SLEEP AND WAKE-UP OF BASE STATION, AND METHOD AND STORAGE MEDIUM**

(30) Priority: 29.09.2020 CN 202011052695
(71) Applicant: Sony Group Corporation, Minato-Ku, Tokyo, 108-0075 (JP)
(72) Inventor: ZHANG, Shumeng, Beijing 100876 (CN); YAN, Shiying, Beijing 100876 (CN); HUANG, Zhihan, Beijing 100876 (CN); TIAN, Lu, Beijing 100876 (CN); LI, Kun, Beijing 100876 (CN); LI, Haojin, Beijing 100876 (CN); CUI, Tao, Beijing 100876 (CN); XU, Xiaodong, Beijing 100876 (CN)
(74) Representative: D Young & Co LLP
(86) International application number: PCT/CN2021/120864
(87) International publication number: WO 2022/068759

(57) **Abstract**

The present disclosure relates to an electronic device, method and storage medium for sleep and wake-up of a base station. A method for a first base station is described, the method comprising: detecting a first indicator of the first base station; in response to the detected first indicator indicating that the workload of the first base station is lower than a first threshold, sending first information to a second base station, wherein the first information includes information for indicating that the first base station requests to sleep; and receiving second information for the first information from the second base station, wherein the second information indicates whether the first base station is allowed to sleep. In the method, the first base station may include an Integrated Access and Backhaul (IAB) base station, and the second base station may include an IAB donor base station.

## Description

### TECHNICAL FIELD

The present disclosure generally relates to systems and methods for energy-saving of base stations, and more particularly to techniques for sleep and wake-up of base stations.

### BACKGROUND

With the development of wireless communication technology, more and more users participate in wireless communication, and users constantly explore and discover new service functions that can be achieved through wireless communication, resulting in a continuously high-speed growth in user service demand. To this end, base stations can be deployed on a large scale in the wireless communication network to provide higher-speed wireless transmission services for more users.

However, too many communication devices working at the same time will lead to a large amount of energy consumption, which will bring an excessive energy supply burden and have a large negative impact on the environment. For example, when the service load in a network is low, having a large number of communication devices work as usual will cause a large amount of unnecessary power consumption, and may cause interference to surrounding communication devices. Therefore, it has become an effective energy-saving method to appropriately put the corresponding communication devices into a sleep state when the service load in a network is light and/or there are one or more communication devices with lighter workload. Accordingly, when the service load in a wireless communication system is heavy and/or there are one or more communication devices with heavier workload, communication devices in the sleep state can be appropriately put into a wake-up state.

Since the energy consumption of base stations is much higher than that of terminal devices, the sleep and wake-up of base stations can significantly save the overall energy consumption of the system. In a wireless communication system, in order to save energy consumption of the entire system, it is necessary to consider whether to sleep/wake up a part of base stations in the system. In this scenario, it is very important to maintain stable wireless communication performance of communication devices (e.g., terminal devices and sub-base stations) served by the base stations. Therefore, there is a need for systems and methods that can further improve energy-saving efficiency and reduce communication interruptions.

### SUMMARY

This disclosure proposes an efficient sleep and wake-up mechanism for base stations, which can reduce the total energy consumption of wireless communication systems, and improve the communication quality between base stations and between base stations and terminal devices.

According to a first aspect of the present disclosure, there is provided an electronic device for a first base station, the electronic device comprising a processing circuit configured to: detect a first indicator of the first base station; send first information to a second base station in response to the detected first indicator indicating that the workload of the first base station is lower than a first threshold, wherein the first information includes information for indicating that the first base station requests to sleep; and receive second information for the first information from the second base station, wherein the second information indicates whether the first base station is allowed to sleep.

Accordingly, according to the first aspect of the present disclosure, there is also provided a method for a first base station, the method comprising: detecting a first indicator of the first base station; sending first information to a second base station in response to the detected first indicator indicating that the workload of the first base station is lower than a first threshold, wherein the first information includes information for indicating that the first base station requests to sleep; and receiving second information for the first information from the second base station, wherein the second information indicates whether the first base station is allowed to sleep.

According to a second aspect of the present disclosure, there is provided an electronic device for a second base station, the electronic device comprising a processing circuit configured to: receive first information from a first base station, wherein the first the information is sent by the first base station in response to detecting that a first indicator of the first base station indicates that the workload of the first base station is lower than a first threshold, and wherein the first information includes information for indicating that the first base station requests to sleep; and send second information for the first information to the first base station, wherein the second information indicates whether the first base station is allowed to sleep.

Accordingly, according to the second aspect of the present disclosure, there is also provided a method for a second base station, the method comprises: receiving first information from a first base station, wherein the first information is sent by the first base station in response to detecting that a first indicator of the first base station indicates that the workload of the first base station is lower than a first threshold, and wherein the first information includes information for indicating that the first base station requests to sleep; and send second information for the first information to the first base station, wherein the second information indicates whether the first base station is allowed to sleep.

According to a third aspect of the present disclosure, there is provided a computer-readable storage medium storing one or more instructions, which, when executed by one or more processors of an electronic device, cause the electronic device performs the methods according to various embodiments of the present disclosure.

According to a fourth aspect of the present disclosure, there is provided an apparatus for wireless communication, the apparatus comprising means or units for performing the methods according to various embodiments of the present disclosure.

The above summary is provided to summarize some exemplary embodiments in order to provide a basic understanding to various aspects of the subject matter described herein. Therefore, above features are merely examples and should not be construed as limiting the scope or spirit of the subject matter described herein in any way. Other features, aspects, and advantages of the subject matter described herein will become apparent from the Detailed Description described below in conjunction with the drawings.

### BRIEF DESCRIPTION OF THE DRAWINGS

A better understanding of the present disclosure can be obtained when the following detailed description of embodiments is considered in conjunction with the accompanying drawings. The same or similar reference numbers are used throughout various drawings to denote the same or similar components. The accompanying drawings, along with the following detailed description, are incorporated in and constitute a part of this specification, to illustrate embodiments of the disclosure and to explain the principles and advantages of the disclosure, wherein:
FIG. 1 illustrates an example scenario diagram of a wireless communication system according to an embodiment of the present disclosure.
FIG. 2 illustrates an exemplary electronic device for a first base station according to an embodiment of the present disclosure.
FIG. 3 illustrates an exemplary electronic device for a second base station according to an embodiment of the present disclosure.
FIG. 4 illustrates a schematic diagram of an example for sleep of a base station according to an embodiment of the present disclosure.
FIG. 5A illustrates a communication interaction diagram of a first example for sleep of a base station according to an embodiment of the present disclosure.
FIG. 5B illustrates a communication interaction diagram of a second example for sleep of a base station according to an embodiment of the present disclosure.
FIG. 6 illustrates a schematic diagram of an example for wake-up a base station according to an embodiment of the present disclosure.
FIG. 7A illustrates a communication interaction diagram of a first example for wake-up of a base station according to an embodiment of the present disclosure.
FIG. 7B illustrates a communication interaction diagram of a second example for wake-up of a base station according to an embodiment of the present disclosure.
FIG. 8 illustrates a schematic diagram of an example of a transmission frame for sleep and wake-up of a base station according to an embodiment of the present disclosure.
FIG. 9 illustrates a flowchart of an example method for a first base station according to an embodiment of the present disclosure.
FIG. 10 illustrates a flowchart of an example method for a second base station according to an embodiment of the present disclosure.
FIG. 11 is a block diagram of an example structure of a personal computer as an information processing device that can be employed in an embodiment of the present disclosure;
FIG. 12 is a block diagram showing a first example of a schematic configuration of a base station to which the technology of the present disclosure can be applied;
FIG. 13 is a block diagram showing a second example of a schematic configuration of a base station to which the technology of the present disclosure can be applied;
FIG. 14 is a block diagram showing an example of a schematic configuration of a smart phone to which the technology of the present disclosure can be applied.
FIG. 15 is a block diagram showing an example of a schematic configuration of a car navigation device to which the technology of the present disclosure can be applied.

While the embodiments described in this disclosure may be susceptible to various modifications and alternatives, specific embodiments thereof are illustrated by way of example in the accompanying drawings and are described in detail herein. It should be understood, however, that the drawings and detailed description thereof are not intended to limit the embodiments to the particular forms disclosed; rather, it is intended to cover all modifications, equivalents and alternative falling within the spirit and scope of the claims.

### DETAILED DESCRIPTION

The following describes representative applications of various aspects of the device and method according to the present disclosure. The description of these examples is merely to add context and help to understand the described embodiments. Therefore, it is clear to those skilled in the art that the embodiments described below can be implemented without some or all of the specific details. In other instances, well-known process steps have not been described in detail to avoid unnecessarily obscuring the described embodiments. Other applications are also possible, and the solution of the present disclosure is not limited to these examples.

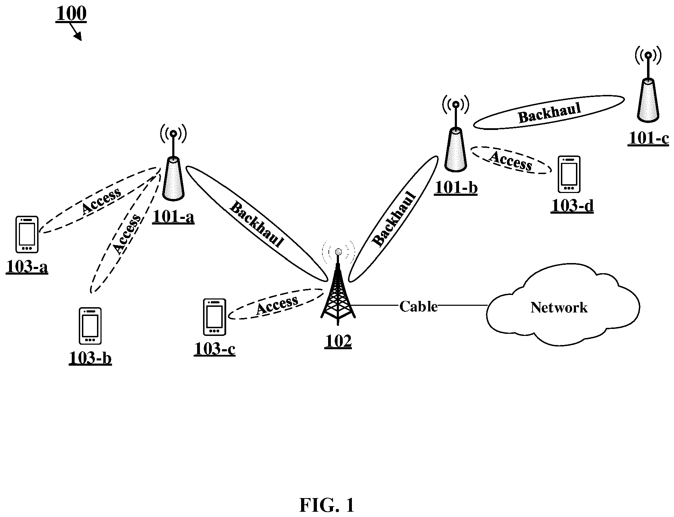

FIG. 1 illustrates an example scenario diagram of a wireless communication system according to an embodiment of the present disclosure. It should be understood that FIG. 1 illustrates only one of many types and possible arrangements of wireless communication systems; the features of the present disclosure may be implemented in any of a variety of systems as desired.

As shown in FIG. 1, the wireless communication system 100 includes base stations 101-a to 101-c (for illustration purpose, any of the base stations 101-a to 101-c may be referred to as the base station 101 or a first base station), a base station 102 (also referred to herein as a second base station), and one or more terminals 103-a to 103-d (for illustration purpose, any of the terminal devices 103-a to 103-d may be referred to herein as a terminal device 103). The base station 102 may be configured to manage and control the base stations 101-a to 101-c. In some embodiments, some or all of the base stations 101-a to 101-c may have mobility. Communication between base stations (for example, between base station 101 and base station 102, and base station 101-b and base station 101-c) may be configured to communicate through a backhaul link. Base stations (e.g., 101, 102) and terminal devices 103 may be configured to communicate over an access link. The base station 102 may also be configured to communicate with a network (e.g., a core network of a cellular service provider, a telecommunications network such as a public switched telephone network (PSTN) and/or the Internet, not shown) via a wired medium (e.g., cable). Accordingly, base stations (e.g., 101, 102) can facilitate communication between terminal devices (e.g., 103-a to 103-c) and/or between terminal devices (e.g., 103-a to 103-c) and a network.

It should be understood that the term base station has its full breadth of ordinary meaning herein and includes at least a wireless communication station that is part of a wireless communication system or radio system to facilitate communication. Examples of base stations may include, but not limited to: at least one of a Base Transceiver Station (BTS) and a Base Station Controller (BSC) in a GSM system; at least one of a Radio Network Controller (RNC) and a Node B in a WCDMA system; an eNB in a LTE and a LTE-Advanced system; an access point (AP) in a WLAN or WiMAX system; and corresponding network nodes in communication systems to be or under development (such as a gNB in a 5G new radio (NR) system, eLTE eNB, etc.). Part of the functions of the base stations herein can also be implemented as an entity that has control functions over communication in D2D, M2M, and V2V communication scenarios, or as an entity that plays a spectrum coordination role in cognitive radio communication scenarios.

It should be understood that base stations (e.g. 101, 102) may operate in accordance with one or more wireless communication technologies to provide continuous or near-continuous radio signal coverage to terminal devices (e.g., 103) and similar devices over a specific geographic area. The coverage area of a base station is generally referred to a cell. Cells of different base stations may have different sizes.

It should be understood that, as an example, in a New Radio (NR) communication system, the base station 101 (the first base station) may include an Integrated Access and Backhaul (IAB) base station, and the base station 102 (the second base station) may include an IAB donor base station.

Herein, the term terminal device has its full breadth of ordinary meaning, for example, a terminal device may be a Mobile Station (MS), User Equipment (UE), etc. A terminal device may be implemented as a device such as a mobile phone, a handheld device, a media player, a computer, a laptop or a tablet, or almost any type of wireless device. In some cases, terminal devices may communicate using multiple wireless communication technologies. For example, a terminal device may be configured to communicate using two or more of GSM, UMTS, CDMA2000, WiMAX, LTE, LTE-A, WLAN, NR, Bluetooth, or the like. In some cases, a terminal device may also be configured to communicate using only one wireless communication technology.

In some embodiments, sleep and wake-up of the base station 101 are proactively decided and initiated by the base station 102, however, this requires extensive detection and analysis, resulting in low efficiency. In addition, as described above, since the base station 101 may have mobility, it may take a long time for base station state transition, resulting in degradation of the quality for user services. Therefore, there is a need for efficient energy-saving methods for sleep and wake-up of base stations. To this end, the present disclosure proposes the following electronic devices for the first base station and the second base station, so as to achieve high efficiency and energy saving while still maintaining stable and good communication quality.

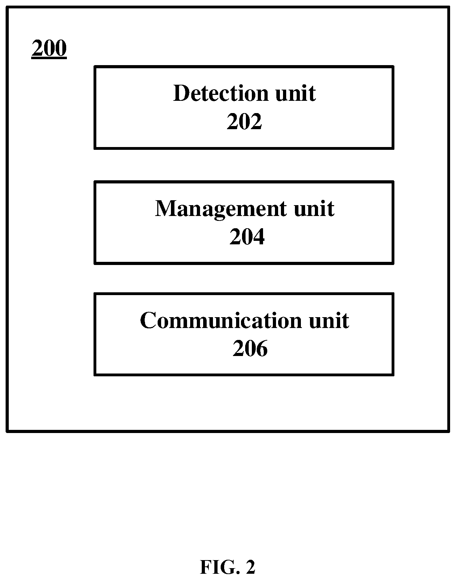

FIG. 2 illustrates an exemplary electronic device for the first base station 101 according to an embodiment of the present disclosure. The electronic device 200 shown in FIG. 2 may include various units to implement various embodiments according to the present disclosure. In this example, the electronic device 200 includes a detection unit 202, a management unit 204 and a communication unit 206. In one implementation, the electronic device 200 is implemented as the first base station 101 itself or a part thereof, or as a device related to the first base station 101 or a part of the device. Various operations described below in conjunction with the first base station may be implemented by units 202, 204, and 206 of the electronic device 200 or other possible units.

In an embodiment, the detection unit 202 of the electronic device 200 may be configured to detect a first indicator of a first base station. The management unit 204 may be configured to determine whether the detected first indicator indicates that the workload of the first base station is lower than a first threshold. In response to the detected first indicator indicating that the workload of the first base station is lower than the first threshold, the communication unit 206 may be configured to send first information to a second base station, wherein the first information includes information for indicating that the first base station requests to sleep. In addition, the communication unit 306 may also be configured to receive second information for the first information from the second base station, wherein the second information indicates whether the first base station is allowed to sleep.

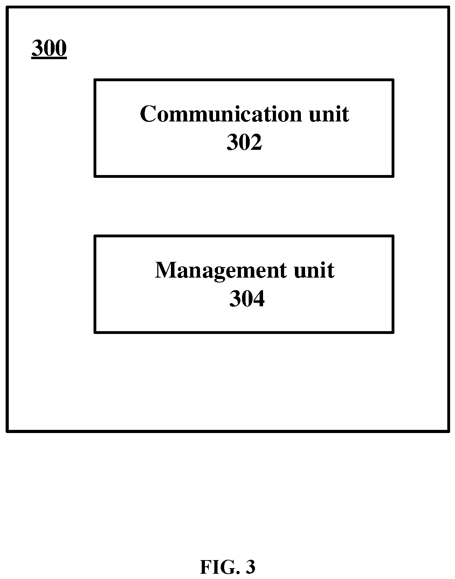

FIG. 3 illustrates an exemplary electronic device 300 for the second base station 102 in the system 100 according to an embodiment of the present disclosure. The electronic device 300 shown in FIG. 3 may include various units to implement various embodiments according to the present disclosure. In this example, the electronic device 300 includes a communication unit 302 and a management unit 304. In one implementation, the electronic device 300 is implemented as the second base station 102 itself or a part thereof, or as a device for controlling the terminal device 102 or otherwise related to the second base station 102 or a part of the device. Various operations described below in conjunction with the second base station may be implemented by units 302 and 304 of the electronic device 300 or other possible units.

In an embodiment, the communication unit 302 of the electronic device 300 may be configured to receive first information from a first base station, wherein the first information is sent by the first base station in response to detecting that a first indicator of the first base station indicates that the workload of the first base station is lower than a first threshold, and wherein the first information includes information for indicating that the first base station requests to sleep. The management unit 304 may determine second information based on the first information, wherein the second information indicates whether the first base station is allowed to sleep. In addition, the communication unit 302 may also be configured to send second information for the first information to the first base station.

In some embodiments, the electronic devices 200 and 300 may be implemented at a chip level, or may also be implemented at a device level by including other external means (such as radio links, antennas, etc.). For example, each electronic device can function as a communication device as a whole.

It should be noted that above units are only logical modules divided according to specific functions they implement, and are not used to limit specific implementations, for example, they can be implemented in software, hardware, or a combination of software and hardware. In practical implementations, above units can be implemented as independent physical entities, or can also be implemented by a single entity (e.g., a processor (CPU or DSP, etc.), an integrated circuit, etc.). Wherein, the processing circuit may refer to various implementations of digital circuitry, analog circuitry, or mixed-signal (combination of analog signal and digital signal) circuitry that perform functions in a computing system. The processing circuits may include, for example, circuits such as Integrated Circuits (ICs), Application Specific Integrated Circuits (ASICs), portions or circuits of individual processor cores, entire processor cores, individual processors, programmable hardware devices such as Field Programmable Gate Arrays (FPGAs), and/or systems including multiple processors.

### Sleep state and wake-up state

Abase station according to the present disclosure may include a sleep state and a wake-up state. In the wake-up state, the base station works normally and consumes greater energy; conversely, in the sleep state, the base station consumes less energy.

It should be understood that the sleep state in the disclosure may include a deep sleep state (sometimes also called an IDLE state) and a light sleep state (sometimes also called an INACTIVE state). The light sleep state consumes slightly more power than the deep sleep state. However, transitioning from the light sleep state to the wake-up state requires less signaling and lower latency, thus enabling faster state transitions. In addition, the light sleep state can shorten the wake-up time and reduce power consumption in mobile scenarios of base stations.

### The sleep of a base station

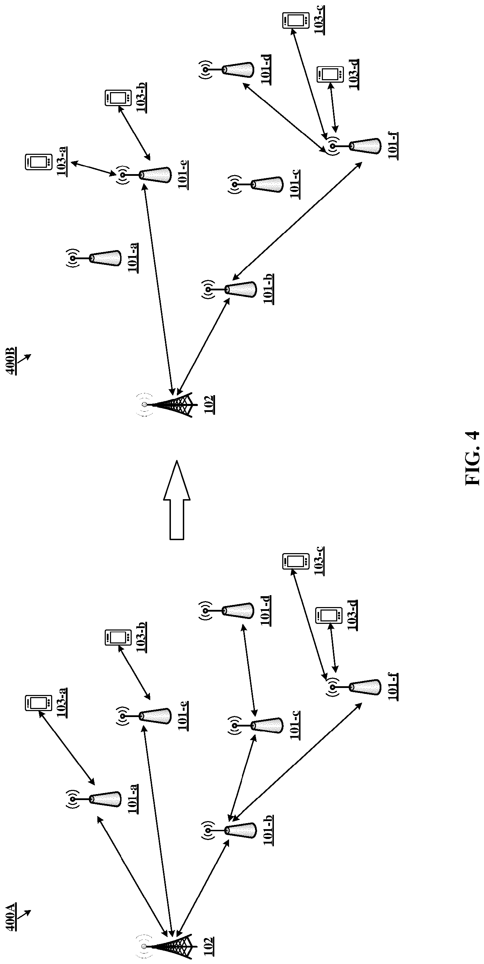

FIG. 4 illustrates a schematic diagram of an example for sleep of a base station according to an embodiment of the present disclosure. More specifically, a system 400A shown in FIG. 4 illustrates an example before a base station goes sleep, while system 400B illustrates an example after a base station goes sleep.

As shown in FIG. 4, the base station 102 manages and controls multiple base stations 101-a to 101-f, and there are multiple terminal devices 103-a to 103-d in the system, wherein the terminal devices are connected to the base station 101. Taking the system 400A as an example, there may be two deployment structures in a wireless communication system: simple deployment and complex deployment. A simple deployment includes only a single level of base stations 101. For example, a base station 102 is connected to a base station 101-a, which in turn is connected to a terminal device 103-a. A complex deployment may include multiple levels of base stations 101. For example, a base station 102 is connected to a base station 101-b, which is in turn connected to a base station 101-c, which is in turn connected to a base station 101-d. In a complex deployment, base stations close to the base station 102 may be referred to as upstream base stations (sometimes also referred to as parent base stations), and otherwise may be referred to as downstream base stations (sometimes also referred to as child base stations). For example, the base station 101-b is an upstream base station of the base station 101-c, and the base station 101-d is a downstream base station of the base station 101-c. It should be understood that FIG. 4 only illustrates an example of network deployment, and there may be more or less levels of base stations in practice.

According to an embodiment of the present disclosure, after the base station 101 detects that its workload is lower than a specific threshold (also referred to herein as a first threshold), it can send first information to the base station 102, wherein the first information includes information for indicating that the base station 101 requests to sleep. The base station 102 may send second information to the base station 101, wherein the second information indicates whether the base station 101 is allowed to sleep. If the base station 101 receives the second information and the second information indicates that it is allowed to sleep, it can notify its served terminal devices and/or downstream base stations to connect to one or more neighboring base stations.

In one embodiment, the base station 101-a in the system 400A detects that its workload is lower than a first threshold and sends first information to the base station 102 including information requesting to sleep. In case of receiving second information from the base station 102 indicating that the base station 101-a is allowed to sleep, the base station 101-a may notify its served terminal device 103-a to connect to other neighboring base stations. Accordingly, in the system 400B, the terminal device 103-a is connected to the neighboring base station 101-c of the base station 101-a, and the base station 101-a enters a sleep state. In another embodiment, the base station 101-c in the system 400A detects that its workload is lower than a first threshold and sends first information to the base station 102 including information requesting to sleep. Since the base station 101-c has an upstream base station 101-b, the first information is transmitted from the base station 101-c to the base station 102 via the base station 101-b. Upon receiving (via the base station 101-b) second information from the base station 102 indicating that base station 101-c is allowed to sleep, the base station 101-c may notify its downstream base station 101-d to connect to other neighboring base stations. Accordingly, in the system 400B, the base station 101-d is connected to the neighboring base station 101-f of the base station 101-c, and the base station 101-c enters a sleep state.

It should be understood that the system 400B only illustrates an example for sleep of the base station. When the base station 101 enters a sleep state, the multiple terminal devices and/or downstream base stations served by it each may be connected to multiple different neighboring base stations.

It should also be understood that connecting to a neighboring base station includes accessing a neighboring base station and switching to a neighboring base station. In one embodiment, if the base station 101 has an ongoing communication with the terminal device 103 before going to sleep, the base station 101 can make the terminal device 103 switch to other neighboring base station. In another embodiment, if the base station 101 has no ongoing communication with the terminal device 103 before going to sleep, the base station 101 may notify the terminal device 103 to access the neighboring base station. Similarly, the above connection operation of the terminal device 103 is also applicable to downstream base stations of the base station 101.

It should also be understood that thresholds herein (for example, the first threshold, as well as a second threshold, a third threshold, and a fourth threshold hereinafter) can be predefined values, or values that have been trained and calculated based on prior experience in conjunction with techniques such as machine learning and the like. It should also be understood that these thresholds may be updated periodically.

The method for sleep of base station according to the present disclosure will be described in detail below through two specific examples.

### First example for sleep of base stations

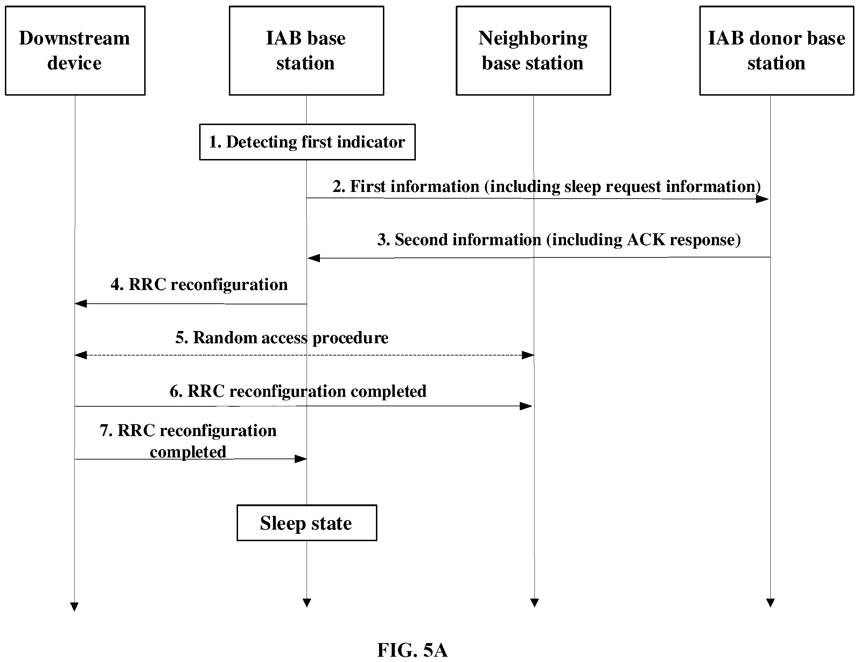

FIG. 5A illustrates a communication interaction diagram of a first example for sleep of a base station according to an embodiment of the present disclosure. The scenarios targeted by the first example include the base station 101 in the simple deployment and the base station 101 closest to the base station 102 in the complex deployment (i.e., the base station 101 is directly connected to the base station 102) of the wireless communication system described above. For illustration purpose, in the first example, the base station 101 is an IAB base station, and the base station 102 is an IAB donor base station.

First, in operation 1, the IAB base station detects its own first indicator, wherein the first indicator includes but not limited to the traffic volume of the IAB base station and/or the power consumption of the IAB base station. That is to say, the first indicator may reflect the size of the workload of the IAB base station. As an example, the workload of the IAB base station may be a function of the first indicator of the IAB base station. Generally speaking, the larger the value of the first indicator, the heavier the workload of the IAB base station; the smaller the value of the first indicator, the lighter the workload of the IAB base station. In response to the detected first indicator indicating that the workload of the IAB base station is lower than a first threshold (i.e., the traffic volume and/or power consumption of the IAB base station is low) . In operation 2, the IAB base station sends to the IAB donor base station first information, wherein the first information includes information for indicating that the IAB base station requests to sleep (this information is also simply referred to as sleep request information herein). Additionally, the first information may also include the value of the first indicator or the workload of the IAB base station, so as to be stored and further analyzed by the IAB donor base station.

Based on the first information, the IAB donor base station may determine second information, and in operation 3, send the second information to the IAB base station, wherein the second information may indicate that the IAB base station is allowed to sleep. As an example, the second information may include an Acknowledgment (ACK) response to the first information (indicating that the IAB base station requests to sleep). The determination of the second information is based at least on the workload status of one or more neighboring IAB base stations of the IAB base station. For example, based at least on one or more neighboring IAB base stations of the IAB base station being lower than a third threshold (i.e., the one or more neighboring IAB base stations have low traffic volume and/or low power consumption), the second information includes an ACK response (i.e., indicating that the IAB base station is allowed to sleep). That is to say, in a case that the IAB donor base station determines that there is a neighboring IAB base station capable of undertaking communication devices (referred to as downstream devices in FIG. 5A, and downstream devices include but are not limited to downstream IAB base stations and terminal devices served by the IAB base station) served by the IAB base station among the neighboring IAB base stations of the IAB base station, it is determined that the IAB base station is allowed to enter the sleep state.

It should be understood that the IAB donor base station may store or have access to an information table including the workload status of each IAB base station in the wireless communication system in which it is located. This information table can be periodically reported by each IAB base station to the IAB donor base station, or obtained by the IAB donor base station through periodic detection.

Additionally, since the IAB donor base station can obtain the workload status of each IAB base station, the second information may further include a list of one or more neighboring IAB base stations of the IAB base station. As an example, the list may include identifiers of one or more neighboring IAB base stations whose workloads are lower than a third threshold, and the one or more neighboring IAB base stations may be sorted in ascending order of workloads. Optionally, the list may further include workload values of above neighboring IAB base stations whose workloads are lower than the third threshold. These information may subsequently be provided to downstream devices of the IAB base station to assist them in selecting and connecting to corresponding neighboring IAB base station(s).

It should be understood that if the IAB donor base station determines that the neighboring IAB base stations of the IAB base station are not capable of undertaking downstream devices of the IAB base station (for example, all the neighboring IAB base stations of the IAB base station have high workloads, that is, all the neighboring IAB base stations of the IAB base station have large traffic volume and/or high power consumption), the IAB donor base station may directly send the second information including a Negative Acknowledgment (NACK) response to the IAB base station or not send a response. If the IAB base station receives a NACK response or does not receive a response within a predetermined time, it will continue to stay in wake-up state, and maintain connection and communication with its downstream devices normally.

After the IAB base station receives the second information including the ACK response from the IAB donor base station, in operation 4, the IAB base station sends Radio Resource Control (RRC) Reconfiguration information to its downstream devices, so that each of the downstream devices performs a random access procedure with a neighboring IAB base station in operation 5.

It should be understood that if only an ACK response indicating that the IAB base station is allowed to sleep is included in the second information, the downstream devices can find suitable neighboring IAB base station(s) by searching randomly or according to a specific criterion (e.g., according to a signal-to-noise ratio (SNR) value) and connect to the neighboring IAB base station(s). If the second information also includes a list of one or more neighboring IAB base stations of the IAB base station, the IAB base station may forward the list to its downstream devices. Based on the list, each of the downstream devices can connect to a neighboring IAB base station with low workload and being able to provide it with high communication quality in a more targeted and faster manner.

After completing the random access procedure, each of the downstream devices of the IAB base station perform RRC reconfiguration with the newly connected neighboring IAB base station in operation 6, and then send RRC reconfiguration completion information to the IAB base station in operation 7. The IAB base station enters a sleep state after receiving the RRC configuration completion information of all downstream devices.

### Second example for sleep of base stations

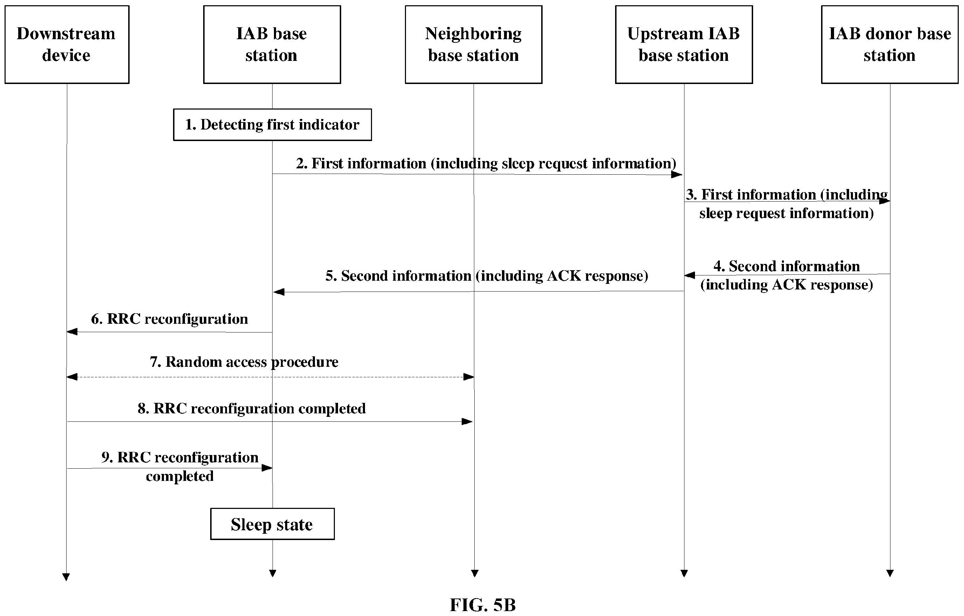

FIG. 5B illustrates a communication interaction diagram of a second example for sleep of a base station according to an embodiment of the present disclosure. The scenarios targeted by the second example include the base station 101 with an upstream base station (i.e., the base station 101 is connected to the base station 102 via the upstream base station) in the complex deployment of the wireless communication system described above. FIG. 5B can be understood in conjunction with the example of FIG. 5A, and the main difference between the two is that in FIG. 5B, the base station 101 and the base station 102 need to interact via the upstream base station of the base station 101. For illustration purpose, in the second example, the base station 101 is an IAB base station, and the base station 102 is an IAB donor base station.

First, in operation 1, the IAB base station detects its own first indicator, wherein the first indicator includes but not limited to the traffic volume of the IAB base station and/or the power consumption of the IAB base station. In response to the detected first indicator indicating that the workload of the IAB base station is lower than a first threshold (i.e., the traffic volume and/or power consumption of the IAB base station is low) . In operation 2, the IAB base station sends first information to its upstream IAB base station, and the upstream IAB base station sends the first information to the IAB donor base station in operation 3. The first information includes information for indicating that the IAB base station requests to sleep (sleep request information) . Additionally, the first information may also include the value of the first indicator or the workload of the IAB base station, so as to be stored and further analyzed by the IAB donor base station.

Based on the first information, the IAB donor base station may determine second information, and send the second information to the upstream IAB base station in operation 4, and the upstream IAB base station send the second information to the IAB base station in operation 5. The second information may indicate that the IAB base station is allowed to sleep. As an example, the second information may include an Acknowledgment (ACK) response to the first information (indicating that the IAB base station requests to sleep). The determination of the second information is based at least on the workload status of one or more neighboring IAB base stations of the IAB base station. For example, based at least on one or more neighboring IAB base stations of the IAB base station being lower than a third threshold (i.e., the one or more neighboring IAB base stations have low traffic volume and/or low power consumption), the second information includes an ACK response (i.e., indicating that the IAB base station is allowed to sleep) . That is to say, in a case that the IAB donor base station determines that there is a neighboring IAB base station capable of undertaking communication devices (referred to as downstream devices in FIG. 5B, and downstream devices include but are not limited to downstream IAB base stations and terminal devices served by the IAB base station) served by the IAB base station among the neighboring IAB base stations of the IAB base station, it is determined that the IAB base station is allowed to enter the sleep state.

Similar to FIG. 5A, additionally, since the IAB donor base station can obtain the workload status of each IAB base station in the wireless communication system in which it is located, the second information can also include a list of one or more neighboring IAB base stations of the IAB base station. As an example, the list may include identifiers of one or more neighboring IAB base stations whose workloads are lower than a third threshold, and the one or more neighboring IAB base stations may be sorted in ascending order of workloads. Optionally, the list may further include workload values of above neighboring IAB base stations whose workloads are lower than the third threshold. These information may subsequently be provided to downstream devices of the IAB base station to assist them in selecting and connecting to corresponding neighboring IAB base station(s).

It should be understood that if the IAB donor base station determines that the neighboring IAB base stations of the IAB base station are not capable of undertaking downstream devices of the IAB base station (for example, all the neighboring IAB base stations of the IAB base station have high workloads, that is, all the neighboring IAB base stations of the IAB base station have large traffic volume and/or high power consumption), the IAB donor base station may send the second information including a Negative Acknowledgment (NACK) response to the IAB base station or not send a response via upstream IAB base stations or not send a response. If the IAB base station receives a NACK response or does not receive a response within a predetermined time, it will continue to stay in wake-up state, and maintain connection and communication with its downstream devices normally.

After the IAB base station receives the second information including the ACK response from the IAB donor base station, in operation 6, the IAB base station sends RRC reconfiguration information to its downstream devices, so that each of the downstream devices performs a random access procedure with a neighboring IAB base station in operation 7.

It should be understood that if only an ACK response indicating that the IAB base station is allowed to sleep is included in the second information, the downstream devices can find suitable neighboring IAB base station(s) by randomly searching or according to a specific criterion (e.g., according to SNR values) and connect to the neighboring IAB base station. If the second information also includes a list of one or more neighboring IAB base stations of the IAB base station, the IAB base station may forward the list to its downstream devices . Based on the list, each of the downstream devices can connect to a neighboring IAB base station with low workload and being able to provide it with high communication quality in a more targeted and faster manner.

After completing the random access procedure, each of the downstream devices of the IAB base station perform RRC reconfiguration with the newly connected neighboring IAB base stations in operation 8, and then send RRC reconfiguration completion information to the IAB base station in operation 9. The IAB base station enters a sleep state after receiving the RRC configuration completion information of all downstream devices.

It should be understood that FIG. 5B only illustrates an example in which an IAB base station has one upstream IAB base station, but in fact there may be multiple levels of upstream IAB base stations, so the first information and the second information between the IAB base station and the IAB donor base station may be transmitted via the multiple levels of upstream IAB base stations in the middle.

In the above first example and second example for sleep of base stations, for illustration purpose, an example in which the first base station 101 is an IAB base station and the second base station 102 is an IAB donor base station is introduced. However, it should be understood that the first base station 101 and the second base station 102 may actually be any other suitable type of base stations.

According to the sleep mechanism for base stations proposed in this disclosure, in a case that a first base station detects that its workload is low, it can proactively request to sleep from a second base station, and the second base station can determine whether to allow the first base station to sleep according to workload status of the neighboring base stations of the first base station stored or accessible locally. After being allowed to sleep, the first base station can notify terminal devices and/or downstream base stations it serves to connect to one or more neighboring base stations of the first base station, ensuring the continuity of communication services.

In the traditional sleep mechanism for terminal devices, a terminal device needs to completely complete the remaining traffic volume before entering a sleep state, which is not suitable for sleep of base stations, because traffic volumes of base stations are much larger than that of terminal devices, and it is difficult to completely clear the remaining traffic volume. According to the sleep mechanism for base stations of the present disclosure, a base station can consider to sleep when the workload is lower than a certain threshold, and can enter a sleep state quickly by making downstream devices connect to neighboring base station(s). On the other hand, in the traditional sleep mechanism for terminal devices, an upstream device such as a base station or a network may decide that a terminal device may enter a sleep state, and notify the terminal device of the decision. If this sleep mechanism is directly applied to the sleep of base stations in the disclosure, the second base station only decides and informs the first base station that it may enter the sleep state, but the downstream devices of the first base station has no knowledge of the decision, which will cause the occurrence of Radio Link Failure (RLF), and the terminal device and downstream base stations will lose services for a period of time. According to the sleep mechanism for base stations of the present disclosure, the first base station can decide itself that it needs to sleep, and inform downstream devices of the decision after obtaining the permission of the second base station, so that they can connect to neighboring base stations, thereby avoiding communication interruption of the downstream devices effectively and maintaining a stable and good communication quality.

According to an embodiment of the present disclosure, the operation of the first base station proactively requesting to sleep realizes local optimization processing, which saves a lot of time compared with the global processing of the second base station determining one or more base stations to sleep according to the detected workload of each base station. This is because the traffic volume of the network changes in real time, the second base station cannot monitor the workload of the first base station in real time, but the first base station can detect its own workload at a relatively high frequency and request to sleep in time. In addition, each base station may have different workload tolerance, that is, different base stations may have different standards for requesting sleep. Therefore, it is more accurate and reasonable for the first base station to determine whether sleep is required according to its own workload.

### Wake-up of base stations

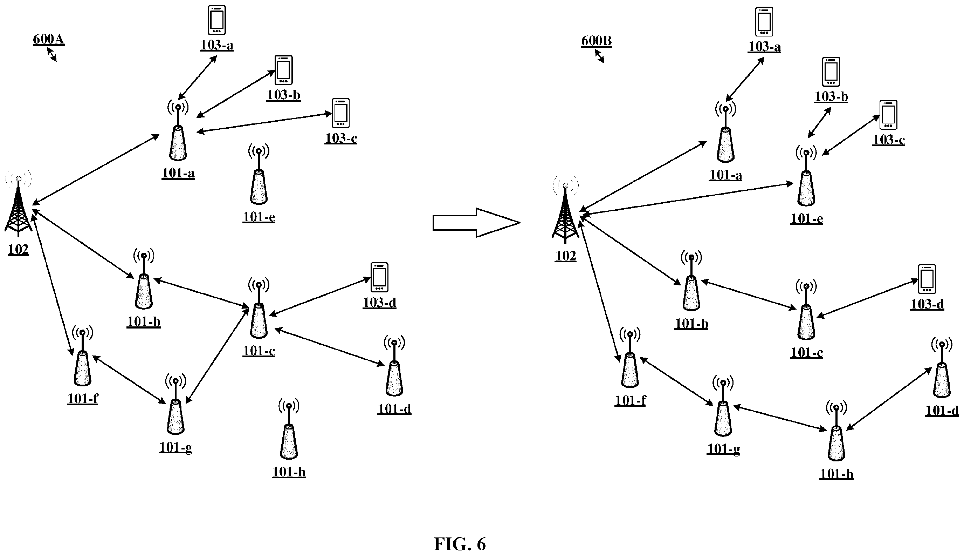

FIG. 6 illustrates a schematic diagram of an example for wake-up of a base station according to an embodiment of the present disclosure. More specifically, the system 600A shown in FIG. 6 illustrates an example before the base station wakes up, while system 600B illustrates an example after the base station wakes up.

As shown in FIG. 6, the base station 102 manages and controls multiple base stations 101a to 101-h, and there are multiple terminal devices 103-a to 103-d in the system, wherein the terminal devices are connected to the base station 101. Taking the system 600A as an example, there may be two deployment structures in a wireless communication system: simple deployment and complex deployment. A simple deployment includes only a single level of base stations 101. For example, a base station 102 is connected to a base station 101-a, which is in turn connected to terminal devices 103-a to 103-c. A complex deployment may include multiple levels of base stations 101. For example, a base station 102 is connected to a base station 101-b, which is in turn connected to base station 101-c, which is in turn connected to base station 101-d. In a complex deployment, base stations close to the base station 102 may be referred to as upstream base stations (sometimes also referred to as parent base stations), and otherwise may be referred to as downstream base stations (sometimes also referred to as child base stations). For example, the base station 101-b is an upstream base station of the base station 101-c, and the base station 101-d is a downstream base station of the base station 101-c. It should be understood that FIG. 6 only illustrates an example of network deployment, and there may be more or less levels of base stations in practice.

According to an embodiment of the present disclosure, after the base station 101 detects that its workload is higher than a specific threshold (also referred to herein as a second threshold, and the second threshold is not less than the first threshold), it can send third information to the base station 102, wherein the third information includes information for indicating requesting to wake-up one or more neighboring base stations of the base station 101 which are in a sleep state. The base station 102 may send information (also referred to herein as fourth information) including response information to the third information to the base station 101. If the base station 102 determines to wake up one or more neighboring base stations of the base station 101, the one or more neighboring base stations will receive wake-up information from the base station 102 and enter a wake-up state. Thereafter, one or more terminal devices and/or downstream base stations served by the base station 101 may connect to at least one neighboring base station.

It should be understood that the heavy workload of the base station 101 may be caused by two reasons: node overload and node congestion. Node overload can refer to too many terminal devices connected to the base station 101, resulting in service overload of the base station 101 (that is, too many access links) ; node congestion can refer to too many base stations connected to the base station 101, and in a large number of services need to be forwarded by the base station 101, thus resulting in congestion in the base station 101 (that is, too many backhaul links). Occurrence of at least one of node overload and node congestion will make the workload of the base station 101 too heavy, so the base station 101 hopes that its neighboring base stations can be woken up to share its workload.

In one embodiment, the base station 101-a in the system 600A detects that its workload is higher than a second threshold (e.g., node overload occurs) and sends third information to the base station 102 including a request to wake up neighboring base stations. Then, the base station 101-a receives fourth information from the base station 102 indicating that the neighboring base stations of the base station 101-a will be woken up, and the neighboring base station 101-e (previously in the sleep state) of the base station 101-a enters the wake-up state. Some or all of the terminal devices 103-a to 103-c served by the base station 101-a will be able to connect to other neighboring base stations. Accordingly, in the system 600B, the terminal device 103-a served by the base station 101-a remains connected, while the terminal devices 103-b and 103-c served by the base station 101-a turn to connect to the neighboring base station 101-e just woken up. In another embodiment, the base station 101-c in the system 600A detects that its workload is higher than the second threshold (e.g., node congestion occurs) and sends third information to the base station 102 including a request to wake up neighboring base stations. Since the base station 101-c has an upstream base station 101-b, the third information is transmitted from the base station 101-c to the base station 102 via the base station 101-b. Then, the base station 101-c (via the base station 101-b) receives fourth information from the base station 102 indicating that the neighboring base stations of the base station 101-c will be woken up, and the neighboring base station 101-h of the base station 101-c (previously in the sleep state) enters the wake-up state. Some or all of the terminal devices 103-d and downstream base stations 101-d served by the base station 101-c will be able to connect to other neighboring base station(s). Accordingly, in the system 600B, the terminal device 103-d served by the base station 101-c remains connected, while the downstream base station 101-d of the base station 101-c turns to connect to the neighboring base station 101-h just woken up.

It should be understood that the system 600B only illustrates an example for wake-up of a base station. In a case that one or more neighboring base stations of the base station 101 are woken up, the multiple terminal devices and/or downstream base stations served by the base station 101 each may be connected to multiple different neighboring base stations. It should also be understood that the neighboring base stations of the terminal devices and/or the downstream base stations may be the neighboring base stations just woken up, so as to transfer the workload to such base stations to alleviate the overload and congestion of the base station 101.

The method for wake-up of base stations according to the present disclosure will be described in detail below through two specific examples.

### First example for wake-up of base stations

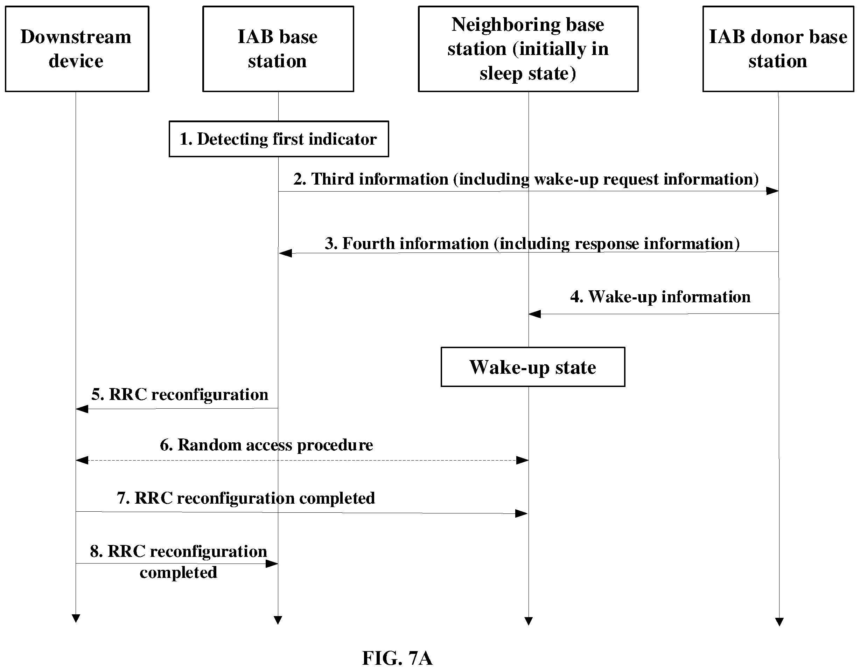

FIG. 7A illustrates a communication interaction diagram of a first example for wake-up of a base station according to an embodiment of the present disclosure. The scenarios targeted by the first example include the base station 101 in the simple deployment and the base station 101 closest to the base station 102 in the complex deployment (i.e., the base station 101 is directly connected to the base station 102) of the wireless communication system described above. For illustration purpose, in the first example, the base station 101 is an IAB base station, and the base station 102 is an IAB donor base station.

First, in operation 1, the IAB base station detects its own first indicator, wherein the first indicator includes but not limited to the traffic volume of the IAB base station and/or the power consumption of the IAB base station. That is to say, the first indicator may reflect the size of the workload of the IAB base station. As an example, the workload of the IAB base station may be a function of the first indicator of the IAB base station. Generally speaking, the larger the value of the first indicator, the heavier the workload of the IAB base station. As described above, there are two reasons for the heavy workload of the IAB base station: node overload and node congestion. Therefore, the workload from the terminal device (i.e., the load of the access link) and the workload from the base station (i.e., the load of the backhaul link) can also be counted separately. In response to the detected first indicator indicating that the workload of the IAB base station is higher than the second threshold (for example, either or both of node overload and node congestion occurs, resulting in larger traffic volume and/or higher power consumption of the IAB base station), in operation 2, the IAB base station sends third information to the IAB donor base station, wherein the third information includes information for indicating requesting to wake-up one or more neighboring IAB base stations of the IAB base station (this information is also referred to as request wake-up information). Additionally, the third information may also include the value of the first indicator or the workload of the IAB base station for storage and further analysis by the IAB donor base station.

Based on the third information, the IAB donor base station may determine fourth information, and send the fourth information to the IAB base station in operation 3, wherein the fourth information may include response information to the third information. As an example, the response information may indicate that one or more neighboring base stations of the IAB base station will be woken up. The determination of the fourth information is based at least on sleep states of one or more neighboring IAB base stations of the IAB base station. That is to say, in a case that the IAB donor base station determines that there are one or more neighboring IAB base stations in a sleep state among the neighboring IAB base stations of the IAB base station, and some or all of the one or more neighboring IAB base stations are capable of undertaking communication devices (referred to as downstream devices in FIG. 7A, and downstream devices include but are not limited to downstream IAB base stations and terminal devices served by the IAB base station) served by the IAB base station, it is determined to wake up some or all of the one or more neighboring IAB base stations.

It should be understood that the IAB donor base station may store or have access to an information table including the workload status of each IAB base station and network topology (including location information, etc. of base stations and terminal devices) in the wireless communication system in which it is located. This information table can be periodically reported to the IAB donor base station by each IAB base station and terminal device, or obtained by the IAB donor base station through periodic detection. It should also be understood that the IAB donor base station may randomly designate neighboring IAB base station (s) to be woken up, or determine which neighboring base station (s) of the IAB base station to be woken up based on the information table of the network topology.

Additionally, the fourth information may further include specific information of one or more neighboring IAB base stations to be woken up, to enable downstream devices of the IAB base station to connect to at least one neighboring base station. As an example, the specific information may be presented in the form of a list, and the list may include identifiers of one or more neighboring IAB base stations to be woken up, and may optionally include location information of the one or more neighboring IAB base stations. These specific information may subsequently be provided to downstream devices of the IAB base stations to assist them in selecting and connecting to corresponding neighboring IAB base station(s).

It should be understood that if the IAB donor base station determines that there is no neighboring base station of the IAB base station which is in the sleep state, the IAB donor base station can determine whether there are one or more neighboring IAB base stations among the neighboring IAB base stations of the IAB base station whose workload is lower than a fourth threshold (the fourth threshold is smaller than the second threshold) (that is, one or more neighboring IAB base stations have low traffic volume and/or lower power consumption) based on the obtained information table of the workload status of the IAB base station. That is to say, in a case that the IAB donor base station determines that the one or more neighboring IAB base stations of the IAB base station are capable of undertaking some or all of downstream devices of the IAB base station, it can inform the IAB base station and make some or all of its downstream devices connect to neighboring IAB base station(s) with lower workload.

In operation 4, the IAB donor base station sends wake-up information to one or more neighboring IAB base stations to be woken up, and the one or more neighboring IAB base stations transition from the sleep state to the wake-up state. It should be noted that the sleep neighboring IAB base stations may have mobility. In order to reduce signaling interactions and resulting latency, wake-up information can be transmitted over the F1 interface between central units of the sleep IAB base station and the IAB donor base station. After receiving the fourth information, the IAB base station sends RRC reconfiguration information to its downstream devices in operation 5, so that the downstream devices perform a random access procedure with neighboring IAB base station(s) in operation 6.

It should be understood that the IAB base station may notify all of its downstream devices to perform RRC reconfiguration. Alternatively, the IAB base station may also select a part of downstream devices to perform RRC reconfiguration randomly or according to a specific criterion (for example, the traffic volume with the downstream devices exceeds a specific threshold).

It should also be understood that if the fourth information includes only a positive indication that one or more neighboring IAB base stations will be woken up, the downstream devices can find suitable neighboring IAB base station(s) by searching randomly or according to a specific criterion (for example, according to SNR values) and connect to the neighboring IAB base station(s). If the second information also includes specific information of one or more neighboring IAB base stations of the IAB base station to be woken up, the IAB base station may forward the specific information to its downstream devices. Based on the specific information, the downstream devices can connect to the neighboring IAB base station (s) just woken up and being able to provide them with higher communication quality in a more targeted and faster manner.

After completing the random access procedure, the downstream devices of the IAB base station perform RRC reconfiguration with the newly connected neighboring IAB base station(s) in operation 7, and then send RRC reconfiguration completion information to the IAB base station in operation 8.

It should be understood that the IAB donor base station can also directly send information indicating that one or more neighboring IAB base stations have been woken up (and optionally, information of identifiers of the one or more neighboring IAB base stations woken up) to the downstream devices of the IAB base station after waking up the neighboring IAB base stations, so that the downstream devices can connect to neighboring IAB base station(s) as needed. It should be noted that in this case, the RRC reconfiguration procedure between the IAB base station and the downstream devices can be omitted (i.e. operations 5, 7-8 can be omitted). Optionally, in this case, the operation for transmitting the fourth information (i.e. operation 3) can also be omitted.

### Second example for wake-up of base stations

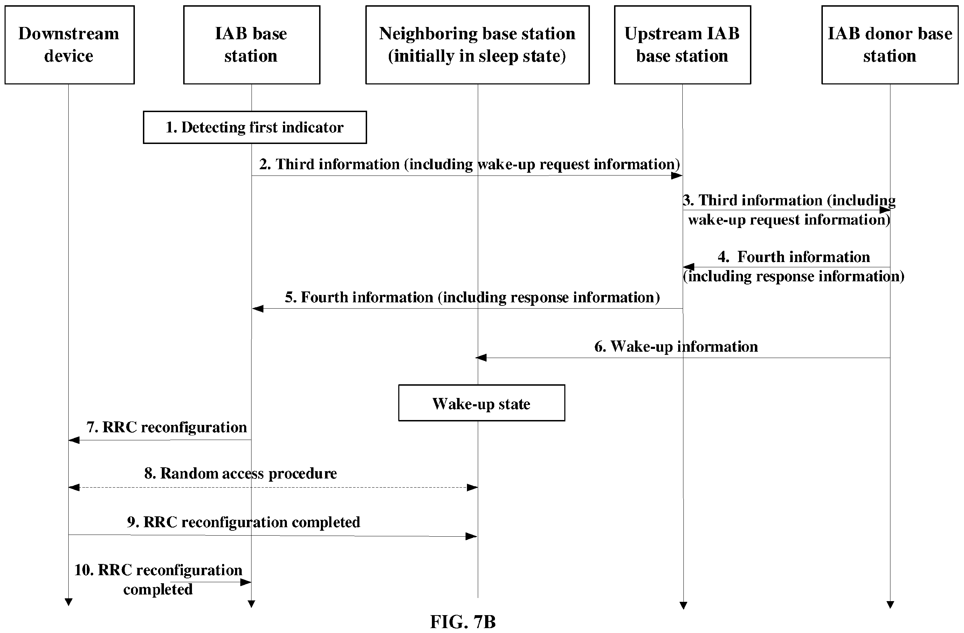

FIG. 7B illustrates a communication interaction diagram of a second example for wake-up of a base station according to an embodiment of the present disclosure. The scenarios targeted by the second example include the base station 101 with an upstream base station (i.e., the base station 101 is connected to the base station 102 via the upstream base station) in the complex deployment of the wireless communication system described above. FIG. 7B can be understood in conjunction with the example of FIG. 7A, and the main difference between the two is that in FIG. 7B, the base station 101 and the base station 102 need to interact via the upstream base station of the base station 101. For illustration purpose, in the second example, the base station 101 is an IAB base station, and the base station 102 is an IAB donor base station.

First, in operation 1, the IAB base station detects its own first indicator, wherein the first indicator includes but not limited to the traffic volume of the IAB base station and/or the power consumption of the IAB base station. That is to say, the first indicator may reflect the size of the workload of the IAB base station. As described above, there are two reasons for the heavy workload of the IAB base station: node overload and node congestion. Therefore, the workload from the terminal device (i.e., the load of the access link) and the workload from the base station (i.e., the load of the backhaul link) can also be counted separately. In response to the detected first indicator indicating that the workload of the IAB base station is higher than the second threshold (for example, either or both of node overload and node congestion occurs, resulting in larger traffic volume and/or higher power consumption of the IAB base station) . In operation 2, the IAB base station sends third information to its upstream IAB base station, and the upstream IAB base station sends the third information to the IAB donor base station in operation 3. The third information includes information for indicating requesting to wake up one or more neighboring IAB base stations of the IAB base station (request wake-up information). Additionally, the third information may also include the value of the first indicator or the workload of the IAB base station for storage and further analysis by the IAB donor base station.

Based on the third information, the IAB donor base station may determine fourth information, and send the fourth information to the upstream IAB base station in operation 4, and the upstream IAB base station sends the fourth information to the IAB base station in operation 5. The fourth information may include response information to the third information. As an example, the response information may indicate that one or more neighboring base stations of the IAB base station will be woken up. The determination of the fourth information is based at least on sleep states of one or more neighboring IAB base stations of the IAB base station. That is to say, in a case that the IAB donor base station determines that there are one or more neighboring IAB base stations in a sleep state among the neighboring IAB base stations of the IAB base station, and some or all of the one or more neighboring IAB base stations are capable of undertaking communication devices (referred to as downstream devices in FIG. 7B, and downstream devices include but are not limited to downstream IAB base stations and terminal devices served by the IAB base station) served by the IAB base station, determine to wake up some or all of the one or more neighboring IAB base stations.

Similar to FIG. 7A, in addition, the IAB donor base station may store or have access to information table including the workload status of each IAB base station and network topology (including location information, etc. of base stations and terminal devices) in the wireless communication system in which it is located. Therefore, the fourth information may also include specific information of one or more neighboring IAB base stations to be woken up, to enable downstream devices of the IAB base station to connect to at least one neighboring base station. As an example, the specific information may be presented in the form of a list, and the list may include identifiers of one or more neighboring IAB base stations to be woken up, and may optionally include location information of the one or more neighboring IAB base stations. These specific information may subsequently be provided to downstream devices of the IAB base stations to assist them in selecting and connecting to corresponding neighboring IAB base station(s).

It should be understood that if the IAB donor base station determines that there is no neighboring base station of the IAB base station which is in the sleep state, the IAB donor base station can determine whether there are one or more neighboring IAB base stations among the neighboring IAB base stations of the IAB base station whose workload is lower than a fourth threshold (the fourth threshold is smaller than the second threshold) (that is, one or more neighboring IAB base stations have low traffic volume and/or lower power consumption) based on the obtained information table of the workload status of the IAB base station. That is to say, in a case that the IAB donor base station determines that the one or more neighboring IAB base stations of the IAB base station are capable of undertaking some or all of downstream devices of the IAB base station, it can inform the IAB base station via the upstream IAB base stations and make some or all of the downstream devices of the IAB base station connect to neighboring IAB base station(s) with lower workload.

In operation 6, the IAB donor base station sends wake-up information to one or more neighboring IAB base stations to be woken up, and the one or more neighboring IAB base stations transition from the sleep state to the wake-up state. In order to reduce signaling interactions and resulting latency, wake-up information can be transmitted over the F1 interface between central units of the sleep IAB base station and the IAB donor base station. After receiving the fourth information, the IAB base station sends RRC reconfiguration information to its downstream device in operation 7, so that the downstream devices perform a random access procedure with neighboring IAB base station(s) in operation 8.

It should be understood that the IAB base station may notify all of its downstream devices to perform RRC reconfiguration. Alternatively, the IAB base station may also select a part of downstream devices to perform RRC reconfiguration randomly or according to a specific criterion (for example, the traffic volume with the downstream devices exceeds a specific threshold).

It should also be understood that if the fourth information includes only a positive indication that one or more neighboring IAB base stations will be woken up, the downstream devices can find suitable neighboring IAB base station(s) by searching randomly or according to a specific criterion (for example, according to SNR values) and connect to the neighboring IAB base station(s). If the second information also includes specific information of one or more neighboring IAB base stations of the IAB base station to be woken up, the IAB base station may forward the specific information to its downstream devices. Based on the specific information, the downstream devices can connect to the neighboring IAB base station (s) just woken up and being able to provide them with higher communication quality in a more targeted and faster manner.

After completing the random access procedure, the downstream devices of the IAB base station perform RRC reconfiguration with the newly connected neighboring IAB base station(s) in operation 9, and then send RRC reconfiguration completion information to the IAB base station in operation 10.

It should be understood that the IAB donor base station can also directly send information indicating that the neighboring IAB base station(s) has (have) been woken up (and optionally, information of identifiers of the neighboring IAB base station(s) woken up) to the downstream devices of the IAB base station after waking up the neighboring IAB base station (s), so that the downstream devices can connect to neighboring IAB base station(s) as needed. It should be noted that in this case, the RRC reconfiguration procedure between the IAB base station and the downstream devices can be omitted (i.e. operations 7, 9-10 can be omitted). Optionally, in this case, the operations for transmitting the fourth information (i.e. operations 4 and 5) can also be omitted.

It should be understood that, Fig. 7B only illustrates an example in which the IAB base station has one upstream IAB base station, but in fact there may be multiple levels of upstream IAB base stations, so the first information and the second information between the IAB base station and the IAB donor base station may be transmitted via the multiple levels of upstream IAB base stations in the middle.

In the above first example and second example for sleep of base stations, for illustration purpose, an example in which the first base station 101 is an IAB base station and the second base station 102 is an IAB donor base station is introduced. However, it should be understood that the first base station 101 and the second base station 102 may actually be any other suitable type of base stations.

According to the wake-up mechanism for base stations proposed in this disclosure, in a case that a first base station detects that its own workload is high, it can request a second base station to wake up neighboring base stations, and the second base station determines whether to wake up one or more neighboring base stations according to the sleep states of the neighboring base stations of the first base station stored or accessible locally. After waking up one or more neighboring base stations, some or all of the terminal devices and/or downstream base stations served by the first base station can connect to at least one neighboring base station, which relieves the heavy workload of the first base station.

In the traditional wake-up mechanism for terminal devices, a terminal device can trigger its own wake-up when it detects that it has an uplink service demand. However, this wake-up mechanism cannot be directly applied to the wake-up for base stations in the present disclosure. This is because when a terminal device detects that it has an uplink service demand and its nearest base station is in a sleep state, the terminal device will directly connect to another neighboring base station for communication in accordance with the energy-saving principle, and will not proactively request to wake-up the sleep base station. On the other hand, in the traditional wake-up mechanism for terminal devices, an upstream device such as a base station or a network can wake up the terminal device via network paging, etc., and this method is not applicable to the wake-up for base stations in the present disclosure. Aimless network paging will consume a lot of time and resources, and the efficiency is too low. According to the sleep mechanism for base stations of the present disclosure, after the first base station sends a request to wake up neighboring base stations, it helps to accurately locate the area where the base station needs to be woken up, so that the second base station can quickly wake up one or more neighboring base stations to relieve the overload and congestion problems of the first base station.

According to an embodiment of the present disclosure, the process of the first base station proactively requesting to wake up neighboring sleep base stations is efficient and time-saving. If the first base station only sends the value of the workload to the second base station, the second base station will not take the initiative to judge and determine whether the information is periodically reported information or information that requests to wake up neighboring base stations. Sending of the wake-up request information helps the second base station to specifically inquire about the neighboring sleep base stations of the first base station and determine which neighboring base station(s) is(are) to be woken up. In addition, each base station may have different workload tolerance, that is, different base stations may have different standards for sending overload and congestion, so it is more accurate and reasonable for the first base station to determine whether it needs to request to wake up neighboring base stations to share its workload according to its own workload.

### Signaling example

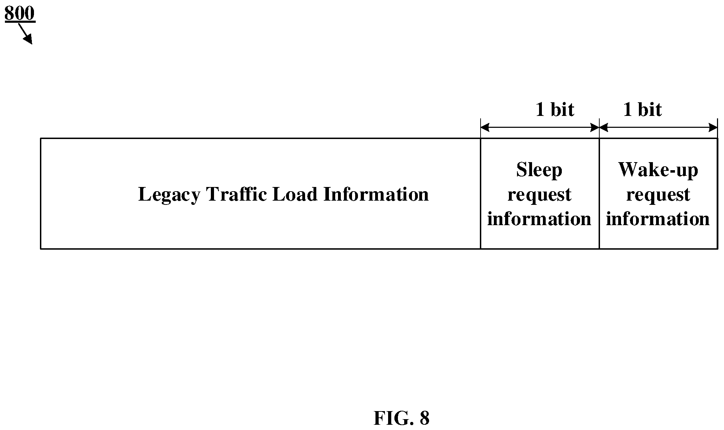

FIG. 8 illustrates a schematic diagram of an example of a transmission frame for sleep and wake-up of a base station according to an embodiment of the present disclosure.

As shown in FIG. 8, sleep request information for indicating requesting to sleep and wake-up request information for requesting to wake up other neighboring base stations sent by the first base station to the second base station may be included in the Legacy Traffic Load Information field in the existing transmission frame. As an example, one bit may be added to the Legacy Traffic Load Information field to represent the sleep request information, and when the first base station detects that its workload is low (for example, lower than a first threshold), the value of this bit may be set to 1 to indicate that sleep is requested, otherwise the value of this bit is set to 0. Similarly, one more bit can be added to the Legacy Traffic Load Information field to represent the wake-up request information. When the first base station detects that its workload from terminal devices and/or other base stations is high (for example, higher than a second threshold), the value of this bit can be set to 1 to indicate that neighboring base stations in sleep state are requested to wake up, otherwise the value of this bit is set to 0.

It should be understood that the above sleep request information and the wake-up request information may also be included in other fields of the transmission frame. Alternatively, in some embodiments, the sleep request information and the wake-up request information may also occupy more bits, or occupy idle bits in the original field.

The sleep and wake-up mechanisms for base stations proposed in the present disclosure enable the first base station to determine whether to request to sleep or request to wake up other neighboring base stations according to the detected workload of itself. The second base station assists in determining whether to allow the first base station to sleep or wake up one or more neighboring base stations of the first base station according to information such as global base station workload status and sleep state, etc. It can be seen that the above process helps the second base station to query information and make decisions in a targeted manner, so that the sleep and wake-up procedures are very efficient and time-saving. In addition, when the first base station receives permission to sleep, it can notify terminal devices and/or downstream base stations it serves to connect to an appropriate neighboring base station in time, which can reduce communication interruptions and ensure stable and good communication service quality. The mechanisms proposed in the present disclosure also allow different base stations to determine whether the workload is too light or too heavy according to their own undertaking capacity, which has greater flexibility and diversity. In addition, allowing to use the F1 interface instead of the traditional RRC connection to transmit wake-up information in the NR communication system can further reduce the latency caused by the number of signaling transmissions, thereby shortening the total wake-up time.

### Exemplary methods

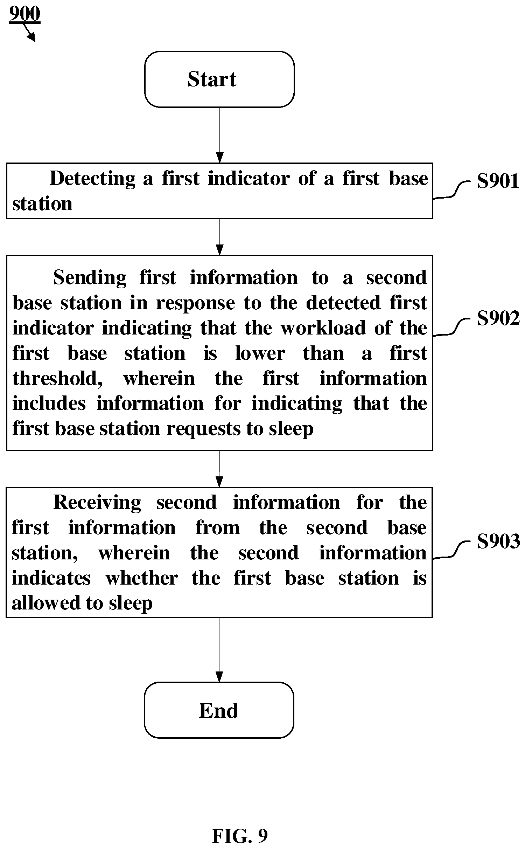

FIG. 9 illustrates a flowchart of an example method 900 for a first base station according to an embodiment of the disclosure. The method can be executed by the base station 101 (or more specifically, the electronic device 200) in the system 100. As shown in FIG. 9, the method 900 may include detecting a first indicator of the first base station (block S901); sending the first information to a second base station in response to the detected first indicator indicating that the workload of the first base station is lower than a first threshold, wherein the first information includes information for indicating that the first base station requests to sleep (block S902); and receiving second information for the first information from the second base station, wherein the second information indicates whether the first base station is allowed to sleep (block S903) . For detailed example operations of the method, reference may be made to the above operation description about the first base station 101 (or more specifically, the electronic device 200), which will not be repeated here.

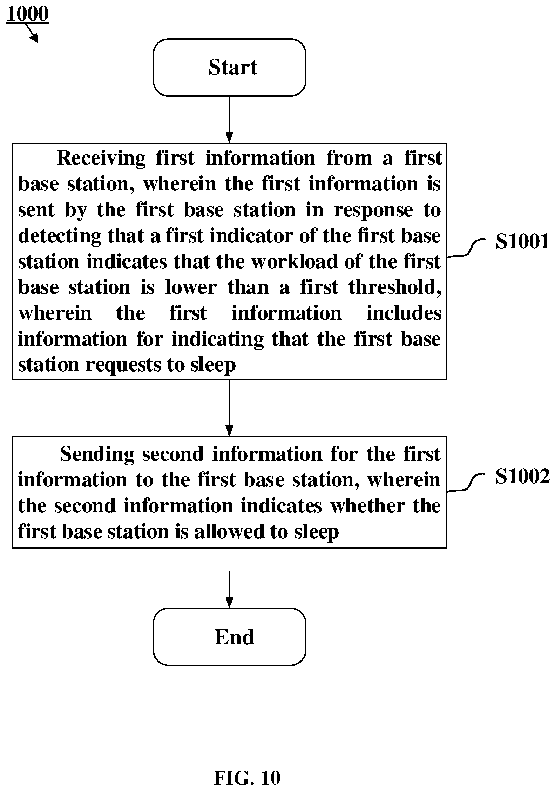

FIG. 10 illustrates a flowchart of an example method 1000 for a second base station according to an embodiment of the disclosure. The method may be performed by the base station 102 (or more specifically, the electronic device 300) in the system 100. As shown in FIG. 10, the method 1000 may include receiving first information from the first base station, wherein the first information is sent by the first base station in response to detecting that a first indicator of the first base station indicates that the workload of the first base station is lower than a first threshold, wherein the first information includes information for indicating that the first base station requests to sleep (block S1001); and sending second information for the first information to the first base station, wherein the second information indicates whether the first base station is allowed to sleep (block S1002) . For detailed example operations of this method, reference may be made to the above operation description about the second base station 102 (or more specifically, the electronic device 300), which will not be repeated here.

Aspects of the present disclosure may be implemented in the following exemplary ways.

Clause 1. An electronic device for a first base station, the electronic device comprising a processing circuitry configured to:
detect a first indicator of the first base station;
send first information to a second base station in response to the detected first indicator indicating that the workload of the first base station is lower than a first threshold, wherein the first information includes information for indicating that the first base station requests to sleep; and
receive second information for the first information from the second base station, wherein the second information indicates whether the first base station is allowed to sleep.

Clause 2. The electronic device according to clause 1, wherein the second information further comprises a list of one or more neighboring base stations of the first base station.

Clause 3. The electronic device according to clause 1 or 2, the processing circuit is further configured to:
in response to receiving the second information and the second information indicating that the first base station is allowed to sleep, notify terminal devices and/or sub-base stations served by the first base station of connecting to one or more neighboring base stations of the first base station.

Clause 4. The electronic device according to clause 1 or 2, wherein the second information is based at least on workload status of one or more neighboring base stations of the first base station.

Clause 5. The electronic device according to clause 1, the processing circuit is further configured to:
in response to the detected first indicator indicating that the workload of the first base station is higher than a second threshold, send third information to the second base station, wherein the third information includes information for indicating requesting to wake up one or more neighboring base stations of the first base station; and
receive fourth information for the third information from the second base station, wherein the fourth information indicates one or more neighboring base stations to be woken up.

Clause 6. The electronic device according to clause 5, the processing circuit is further configured to:
in response to receiving the fourth information, send information about one or more neighboring base stations to be woken up to one or more terminal devices and/or sub-base stations served by the first base station, to enable the one or more terminal devices and/or sub-base stations to connect to at least one neighboring base station.

Clause 7. The electronic device according to clause 5, wherein:
the second information is based at least on the workload of one or more neighboring base stations of the first base station is lower than a third threshold, and the second information indicates that the first base station is allowed to sleep; and/or
the fourth information is based at least on sleep states of one or more neighboring base stations of the first base station.

Clause 8. The electronic device according to clause 3, wherein the first indicator comprises traffic volume of the first base station and/or power consumption of the first base station.

Clause 9. The electronic device according to clause 1, wherein the first base station comprises an Integrated Access and Backhaul (IAB) base station, and the second base station comprises an IAB donor base station.

Clause 10. An electronic device for a second base station, the electronic device comprising a processing circuitry configured to:
receive first information from a first base station, wherein the first information is sent by the first base station in response to detecting that a first indicator of the first base station indicates that the workload of the first base station is lower than a first threshold, and wherein the first information includes information for indicating that the first base station requests to sleep; and
send second information for the first information to the first base station, wherein the second information indicates whether the first base station is allowed to sleep.

Clause 11. The electronic device according to clause 10, wherein the second information further comprises a list of one or more neighboring base stations of the first base station.

Clause 12. The electronic device according to clause 10 or 11, wherein the second information is based at least on the workload status of one or more neighboring base stations of the first base station.

Clause 13. The electronic device according to clause 10, the processing circuit is further configured to:
receive third information from the first base station, wherein the third information is sent by the first base station in response to detecting that the first indicator indicates that the workload of the first base station is higher than a second threshold, and wherein the third information includes information for indicating that the first base station requests to wake up one or more neighboring base stations of the first base station; and
send fourth information for the third information to the first base station, wherein the fourth information indicates one or more neighboring base stations to be woken up.

Clause 14. The electronic device according to clause 13, wherein:
the second information is based at least on the workload of one or more neighboring base stations of the first base station is lower than a third threshold, and the second information indicates that the first base station is allowed to sleep; and/or
the fourth information is based at least on sleep states of one or more neighboring base stations of the first base station.

Clause 15. The electronic device according to clause 10, wherein the first indicator comprises traffic volume of the first base station and/or power consumption of the first base station.

Clause 16. The electronic device according to clause 10, wherein the first base station comprises an Integrated Access and Backhaul (IAB) base station and the second base station comprises an IAB donor base station.

Clause 17. A method for a first base station, the method comprising:
detecting a first indicator of a first base station;
in response to the detected first indicator indicating that the workload of the first base station is lower than a first threshold, sending first information to a second base station, wherein the first information includes information for indicating that the first base station requests to sleep; and
receiving second information for the first information from the second base station, wherein the second information indicates whether the first base station is allowed to sleep.

Clause 18. A method for a second base station, the method comprising:
receiving first information from a first base station, wherein the first information is sent by the first base station in response to detecting that a first indicator of the first base station indicates that the workload of the first base station is lower than a first threshold, and wherein the first information includes information for indicating that the first base station requests to sleep; and
sending second information for the first information to the first base station, wherein the second information indicates whether the first base station is allowed to sleep.

Clause 19. A computer-readable storage medium storing one or more instructions which, when executed by one or more processors of an electronic device, cause the electronic device to perform the method according to Clause 17 or 18.

Clause 20. An apparatus for wireless communication, comprising unit for performing the method according to Clause 17 or 18.

It should be noted that the application instances described above are merely exemplary. The embodiments of the present disclosure can also be executed in any other appropriate manner in the above application instances, and the advantageous effects obtained by the embodiments of the present disclosure can still be achieved. Moreover, the embodiments of the present disclosure can also be applied to other similar application instances, and the advantageous effects obtained by the embodiments of the present disclosure can still be achieved.

It should be understood that machine-executable instructions in a machine-readable storage medium or program product according to embodiments of the present disclosure can be configured to perform operations corresponding to the device and method embodiments described above. When referring to the above device and method embodiments, the embodiments of the machine-readable storage medium or program product will be apparent to those skilled in the art, and therefore description thereof will not be repeated. Machine-readable storage media and program products for carrying or including the above machine-executable instructions also fall within the scope of the present disclosure. Such storage media may include, but are not limited to, floppy disks, optical disks, magneto-optical disks, memory cards, memory sticks, and the like.

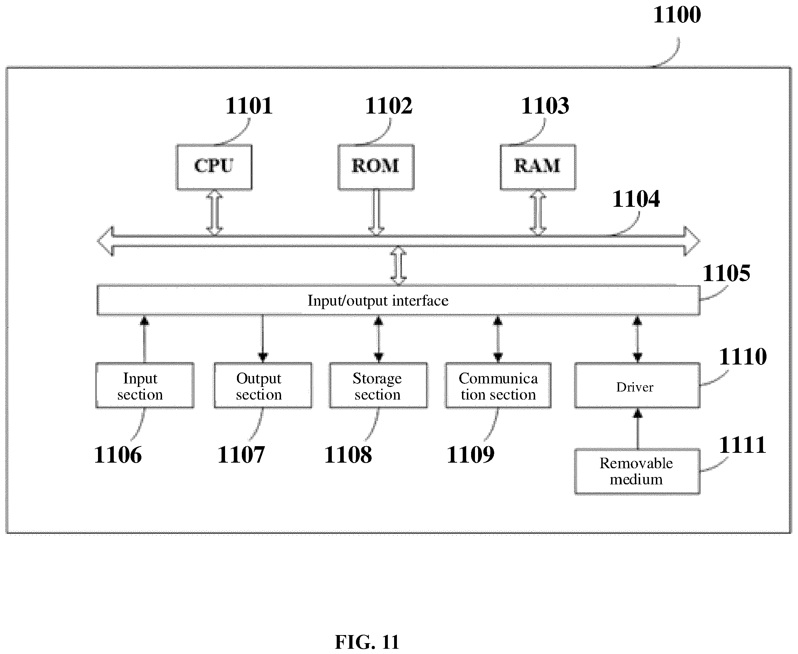

In addition, it should be understood that the above series of processes and devices may also be implemented by software and/or firmware. In a case of being implemented by software and/or firmware, a program constituting the software is installed from a storage medium or a network to a computer having a dedicated hardware structure, such as a general-purpose personal computer 1100 shown in FIG. 11, which, when is installed with various programs, can perform various functions and so on. FIG. 11 is a block diagram showing an example structure of a personal computer as an information processing apparatus that can be employed in an embodiment of the present disclosure. In one example, the personal computer may correspond to the above exemplary terminal device according to the present disclosure.

In FIG. 11, a central processing unit (CPU) 1101 executes various processes according to a program stored in a read only memory (ROM) 1102 or a program loaded from a storage section 1108 to a random access memory (RAM) 1103. In the RAM 1103, data required when the CPU 1101 executes various processes and the like is also stored as necessary.

The CPU 1101, the ROM 1102, and the RAM 1103 are connected to each other via a bus 1104. Input/output interface 1105 is also connected to the bus 1104.

The following components are connected to the input/output interface 1105: an input section 1106 including a keyboard, mouse, etc.; an output section 1107 including a display such as a cathode ray tube (CRT), a liquid crystal display (LCD), etc., and a speaker, etc.; the storage section 1108 including a hard disk etc.; and a communication section 1109 including a network interface card such as a LAN card, a modem, etc. The communication section 1109 performs communication processing via a network such as the Internet.

The driver 1110 is also connected to the input/output interface 1105 as needed. A removable medium 1111 such as a magnetic disk, an optical disk, a magneto-optical disk, a semiconductor memory and the like is mounted on the drive 1110 as needed, so that a computer program read therefrom is installed into the storage section 1108 as needed.

In a case that the above series of processing is implemented by software, a program constituting the software is installed from a network such as the Internet or a storage medium such as a removable medium 1111.

It should be understood by those skilled in the art that such a storage medium is not limited to the removable medium 1111 shown in FIG. 11 in which a program is stored and distributed separately from the device to provide the program to the user. Examples of the removable media 1111 include a magnetic disk (including floppy disks (registered trademark)), optical disks (including compact disk read only memory (CD-ROM) and digital versatile disks (DVD)), magneto-optical disks (including mini discs (MD) (registered trademark)) and semiconductor memories. Alternatively, the storage medium may be the ROM 1102, a hard disk included in the storage section 1108, or the like, in which programs are stored and distributed to users together with the devices containing them.

The techniques of the present disclosure can be applied to various products.

For example, the electronic devices 200 and 300 according to the embodiments of the present disclosure can be implemented as or included in various control devices/base stations, while the methods shown in FIG. 9 and/or 10 may also be implemented by various control devices/base stations.

For example, the control device/base station mentioned in this disclosure can be implemented as any type of base station, e.g., an evolved Node B (gNB), such as a macro gNB and a small gNB. The small gNBs can be a gNB covering a cell smaller than macro cell, such as a pico gNB, a micro gNB, and a home (femto) gNB. Alternatively, the base station can be implemented as any other type of base station, such as a NodeB and a Base Transceiver Station (BTS) . The base station can include: a body (also referred to as a base station device) configured to control wireless communication; and one or more Remote Radio Heads (RRHs) disposed at a different place from the body. In addition, various types of terminals to be described below can each operate as a base station by temporarily or semi-persistently performing base station functions.

For example, the terminal devices mentioned in this disclosure, also referred to as user devices in some examples, can be implemented as mobile terminals (such as smart phones, tablet personal computers (PCs), notebook PCs, portable game terminals, portable / dongle-type mobile routers and digital cameras) or in-vehicle terminals (such as car navigation devices). The user devices may also be implemented as terminals performing machine-to-machine (M2M) communication (also referred to as machine type communication (MTC) terminals). Furthermore, the user devices may be wireless communication modules (such as integrated circuit modules comprising a single die) mounted on each of the above terminals. In some cases, the user devices may communicate using a variety of wireless communication technologies. For example, the user devices can be configured to communicate using two or more of GSM, UMTS, CDMA2000, WiMAX, LTE, LTE-A, WLAN, NR, Bluetooth, and the like. In some cases, the user devices can also be configured to communicate using only one wireless communication technology.

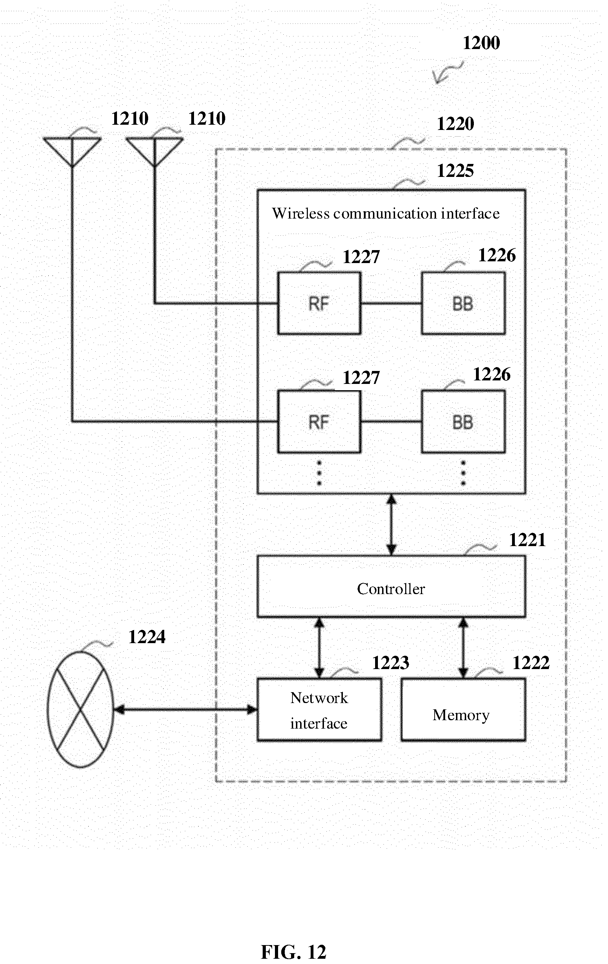

Examples according to the present disclosure will be described below with reference to FIGS. 12 to 15.

### Examples of Base Stations

It should be understood that the term base station in this disclosure has the full breadth of its ordinary meaning and includes at least a wireless communication station used as a wireless communication system or part of a radio system to facilitate communication. Examples of base stations may be, for example, but not limited to: a base station may be one or both of a base transceiver station (BTS) and a base station controller (BSC) in a GSM system, may be one or both of a radio network controller (RNC) and Node B in a WCDMA system, may be an eNB in a LTE and LTE-Advanced system, or may be a corresponding network node in a future communication system (for example, a gNB, an eLTE eNB and the like that may appear in a 5G communication system) . Some functions in the base stations of the present disclosure may also be implemented as entities with control functions to communication in D2D, M2M and V2V communication scenarios, or as entities with spectrum coordination functions in cognitive radio communication scenarios.

### first example

FIG. 12 is a block diagram showing a first example of a schematic configuration of a base station (a gNB is taken as an example in this figure) to which the technology of the present disclosure can be applied. The gNB 1200 includes multiple antennas 1210 and a base station device 1220. The base station device 1220 and each antenna 1210 may be connected to each other via an RF cable. In one implementation, the gNB 1200 (or the base station device 1220) here may correspond to the above base stations 101 and 102 (or more specifically, the electronic devices 200 and 300).

Each of the antennas 1210 includes a single or multiple antenna elements (such as multiple antenna elements included in a multiple-input multiple-output (MIMO) antenna), and is used by the base station device 1220 to transmit and receive wireless signals. As shown in FIG. 12, the gNB 1200 may include multiple antennas 1210. For example, the multiple antennas 1210 may be compatible with multiple frequency bands used by the gNB 1200.

The base station device 1220 includes a controller 1221, a memory 1222, a network interface 1223, and a wireless communication interface 1225.

The controller 1221 may be, for example, a CPU or a DSP, and operates various functions of a higher layer of the base station device 1220. For example, the controller 1221 generates data packets from the data in the signal processed by the wireless communication interface 1225, and delivers the generated packets via the network interface 1223. The controller 1221 may bundle data from a plurality of baseband processors to generate a bundled packet, and deliver the generated bundled packet. The controller 1221 may have logical functions to perform controls such as radio resource control, radio bearer control, mobility management, admission control, and scheduling. These controls can be performed in conjunction with nearby gNBs or core network nodes. The memory 1222 includes RAM and ROM, and stores programs executed by the controller 1221 and various types of control data (such as a terminal list, transmission power data, and scheduling data).

The network interface 1223 is a communication interface for connecting the base station device 1220 to the core network 1224. The controller 1221 may communicate with core network nodes or further gNBs via the network interface 1223. In this case, the gNB 1200 and core network nodes or other gNBs may be connected to each other through logical interfaces (such as S1 interface and X2 interface). The network interface 1223 may also be a wired communication interface or a wireless communication interface for wireless backhaul. If the network interface 1223 is a wireless communication interface, the network interface 1223 may use a higher frequency band for wireless communication than the frequency band used by the wireless communication interface 1225.

The wireless communication interface 1225 supports any cellular communication scheme (such as Long Term Evolution (LTE) and LTE-Advanced), and provides wireless connectivity to terminals located in cells of the gNB 1200 via the antenna 1210. The wireless communication interface 1225 may generally include, for example, a baseband (BB) processor 1226 and RF circuit 1227. The BB processor 1226 may perform, for example, encoding/decoding, modulation/demodulation, and multiplexing/demultiplexing, and performs various types of signal processing in layers (for example, L1, Medium Access Control (MAC), Radio Link Control (RLC), and Packet Data Convergence Protocol (PDCP)). In place of the controller 1221, the BB processor 1226 may have some or all of the above logical functions. The BB processor 1226 may be a memory storing a communication control program, or a module including a processor and associated circuit configured to execute the program. Updating the program may cause the functionality of the BB processor 1226 to change. The module may be a card or blade that is inserted into a slot in the base station device 1220. Alternatively, the module can also be a chip mounted on a card or blade. Meanwhile, the RF circuit 1227 may include, for example, a mixer, a filter, and an amplifier, and transmit and receive wireless signals via the antenna 1210. Although FIG. 12 illustrates an example in which one RF circuit 1227 is connected to one antenna 1210, the present disclosure is not limited to this, instead, one RF circuit 1227 may connect multiple antennas 1210 at the same time.

As shown in FIG. 12, the wireless communication interface 1225 may include multiple BB processors 1226. For example, the multiple BB processors 1226 may be compatible with multiple frequency bands used by the gNB 1200. As shown in FIG. 12, the wireless communication interface 1225 may include multiple RF circuits 1227. For example, the multiple RF circuits 1227 may be compatible with multiple antenna elements. Although FIG. 12 illustrates an example in which the wireless communication interface 1225 includes multiple BB processors 1226 and multiple RF circuits 1227, the wireless communication interface 1225 may also include a single BB processor 1226 or a single RF circuit 1227.

### Second example

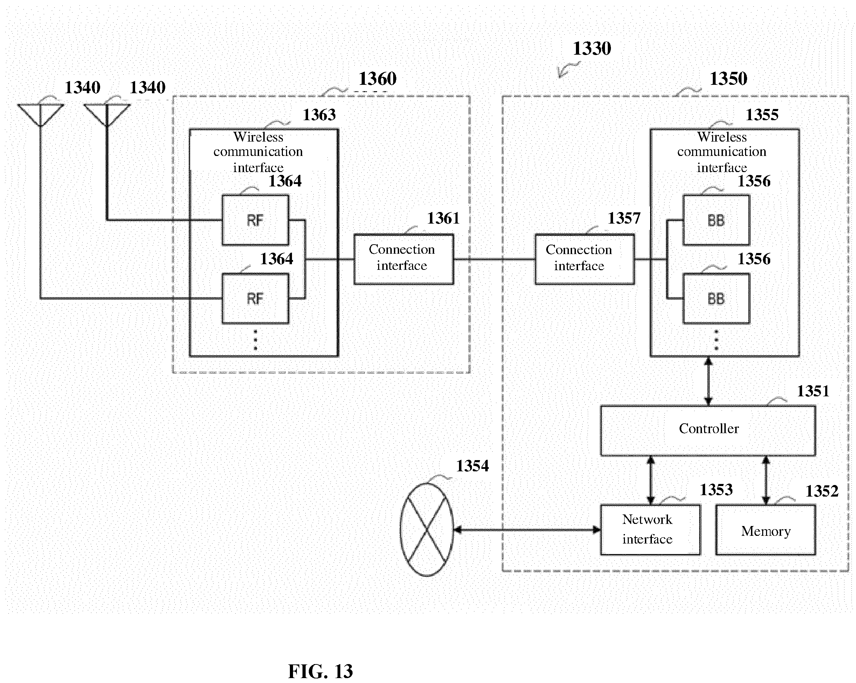

FIG. 13 is a block diagram showing a second example of a schematic configuration of a base station (a gNB is taken as an example in this figure) to which the technology of the present disclosure can be applied. The gNB 1330 includes multiple antennas 1340, a base station device 1350, and a RRH 1360. The RRH 1360 and each antenna 1340 may be connected to each other via an RF cable. The base station device 1350 and the RRH 1360 may be connected to each other via a high-speed line such as an optical fiber cable. In one implementation, the gNB 1330 (or the base station device 1350) here may correspond to the above base stations 101 and 102(or more specifically, the electronic devices 200 and 300).

Each of the antennas 1340 includes a single or multiple antenna elements (such as multiple antenna elements included in a MIMO antenna) and is used by the RRH 1360 to transmit and receive wireless signals. As shown in FIG. 13, the gNB 1330 may include multiple antennas 1340. For example, the multiple antennas 1340 may be compatible with multiple frequency bands used by the gNB 1330.

The base station device 1350 includes a controller 1351, a memory 1352, a network interface 1353, a wireless communication interface 1355, and a connection interface 1357. The controller 1351, the memory 1352 and the network interface 1353 are the same as the controller 1221, the memory 1222 and the network interface 1223 described with reference to FIG. 12.

The wireless communication interface 1355 supports any cellular communication scheme (such as LTE and LTE-Advanced), and provides wireless communication to terminals located in the sector corresponding to RRH 1360 via RRH 1360 and antenna 1340. The wireless communication interface 1355 may generally include, for example, a BB processor 1356. The BB processor 1356 is the same as the BB processor 1226 described with reference to FIG. 12, except that the BB processor 1356 is connected to the RF circuit 1364 of the RRH 1360 via the connection interface 1357. As shown in FIG. 13, the wireless communication interface 1355 may include multiple BB processors 1356. For example, the multiple BB processors 1356 may be compatible with multiple frequency bands used by the gNB 1330. Although FIG. 13 illustrates an example in which the wireless communication interface 1355 includes multiple BB processors 1356, the wireless communication interface 1355 may include a single BB processor 1356.

The connection interface 1357 is an interface for connecting the base station device 1350 (the wireless communication interface 1355) to the RRH 1360. The connection interface 1357 may also be a communication module for communication in the above high-speed line connecting the base station device 1350 (the wireless communication interface 1355) to the RRH 1360.

The RRH 1360 includes a connection interface 1361 and a wireless communication interface 1363.

The connection interface 1361 is an interface for connecting the RRH 1360 (the wireless communication interface 1363) to the base station device 1350. The connection interface 1361 may also be a communication module for communication in the above high-speed line.

The wireless communication interface 1363 transmits and receives wireless signals via the antenna 1340. The wireless communication interface 1363 may typically include an RF circuit 1364, for example. The RF circuit 1364 may include, for example, a mixer, a filter, and an amplifier, and transmit and receive wireless signals via antenna 1340. Although FIG. 13 illustrates an example in which one RF circuit 1364 is connected to one antenna 1340, the present disclosure is not limited to this, instead, one RF circuit 1364 may be connected to multiple antennas 1340 at the same time.

As shown in FIG. 13, the wireless communication interface 1363 may include multiple RF circuits 1364. For example, the multiple RF circuits 1364 may support multiple antenna elements. Although FIG. 13 illustrates an example in which the wireless communication interface 1363 includes multiple RF circuits 1364, the wireless communication interface 1363 may include a single RF circuit 1364.

### Examples for User Devices

### First example

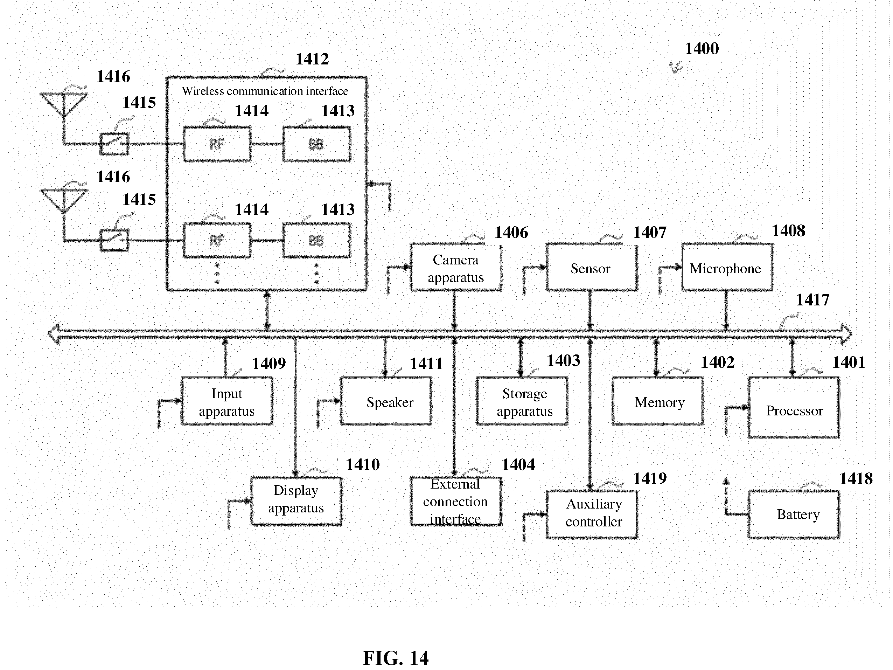

FIG. 14 is a block diagram showing an example of a schematic configuration of a smart phone 1400 to which the techniques of the present disclosure may be applied. The smart phone 1400 includes a processor 1401, a memory 1402, a storage apparatus 1403, an external connection interface 1404, a camera apparatus 1406, a sensor 1407, a microphone 1408, an input apparatus 1409, a display apparatus 1410, a speaker 1411, a wireless communication interface 1412, one or more antenna switches 1415, one or more antennas 1416, a bus 1417, a battery 1418, and an auxiliary controller 1419. In one implementation, the smart phone 1400 (or the processor 1401) here may correspond to the above terminal device 103.

The processor 1401 may be, for example, a CPU or a system on a chip (SoC), and controls functions of the application layer and further layers of the smart phone 1400. The memory 1402 includes RAM and ROM, and stores data and programs executed by the processor 1401. The storage apparatus 1403 may include a storage medium such as a semiconductor memory and a hard disk. The external connection interface 1404 is an interface for connecting an external apparatus (such as a memory card and a Universal Serial Bus (USB) apparatus) to the smart phone 1400.

The camera apparatus 1406 includes an image sensor (such as a charge coupled device (CCD) and a complementary metal oxide semiconductor (CMOS)), and generates captured images. The sensor 1407 may include a set of sensors, such as measurement sensors, gyroscope sensors, geomagnetic sensors, and acceleration sensors. The microphone 1408 converts the sound input to the smart phone 1400 into an audio signal. The input apparatus 1409 includes, for example, a touch sensor configured to detect a touch on the screen of the display apparatus 1410, a keypad, a keyboard, a button, or a switch, and receives operations or information input from a user. The display apparatus 1410 includes a screen (such as a liquid crystal display (LCD) and an organic light emitting diode (OLED) display), and displays an output image of the smart phone 1400. The speaker 1411 converts an audio signal output from the smart phone 1400 into sound.

The wireless communication interface 1412 supports any cellular communication scheme (such as LTE and LTE-Advanced), and performs wireless communication. The wireless communication interface 1412 may generally include, for example, a BB processor 1413 and an RF circuit 1414. The BB processor 1413 may perform, for example, encoding/decoding, modulation/demodulation, and multiplexing/demultiplexing, and perform various types of signal processing for wireless communication. Meanwhile, the RF circuit 1414 may include, for example, a mixer, a filter, and an amplifier, and transmit and receive wireless signals via the antenna 1416. The wireless communication interface 1412 may be a chip module on which the BB processor 1413 and the RF circuit 1414 are integrated. As shown in FIG. 14, the wireless communication interface 1412 may include multiple BB processors 1413 and multiple RF circuits 1414. Although FIG. 14 illustrates an example in which the wireless communication interface 1412 includes multiple BB processors 1413 and multiple RF circuits 1414, the wireless communication interface 1412 may include a single BB processor 1413 or a single RF circuit 1414.

Furthermore, in addition to cellular communication schemes, the wireless communication interface 1412 may support additional types of wireless communication schemes, such as short-range wireless communication schemes, near field communication schemes, and wireless local area network (LAN) schemes. In this case, the wireless communication interface 1412 may include a BB processor 1413 and an RF circuit 1414 for each wireless communication scheme.

Each of the antenna switches 1415 switches the connection destination of the antenna 1416 among a plurality of circuits (e.g., circuits for different wireless communication schemes) included in the wireless communication interface 1412.

Each of the antennas 1416 includes a single or multiple antenna elements (such as multiple antenna elements included in a MIMO antenna), and is used for the wireless communication interface 1412 to transmit and receive wireless signals. As shown in FIG. 14, the smart phone 1400 may include multiple antennas 1416. Although FIG. 14 illustrates an example in which the smart phone 1400 includes multiple antennas 1416, the smart phone 1400 may also include a single antenna 1416.

Furthermore, the smart phone 1400 may include an antenna 1416 for each wireless communication scheme. In this case, the antenna switch 1415 can be omitted from the configuration of the smart phone 1400.

The bus 1417 connects the processor 1401, the memory 1402, the storage apparatus 1403, the external connection interface 1404, the camera apparatus 1406, the sensor 1407, the microphone 1408, the input apparatus 1409, the display apparatus 1410, the speaker 1411, the wireless communication interface 1412, and the auxiliary controller 1419 to each other. The battery 1418 provides power to the various blocks of the smart phone 1400 shown in FIG. 14 via feeders, which are partially shown in phantom in the figure. The auxiliary controller 1419 operates the minimum necessary functions of the smart phone 1400, e.g., in sleep mode.

### Second example

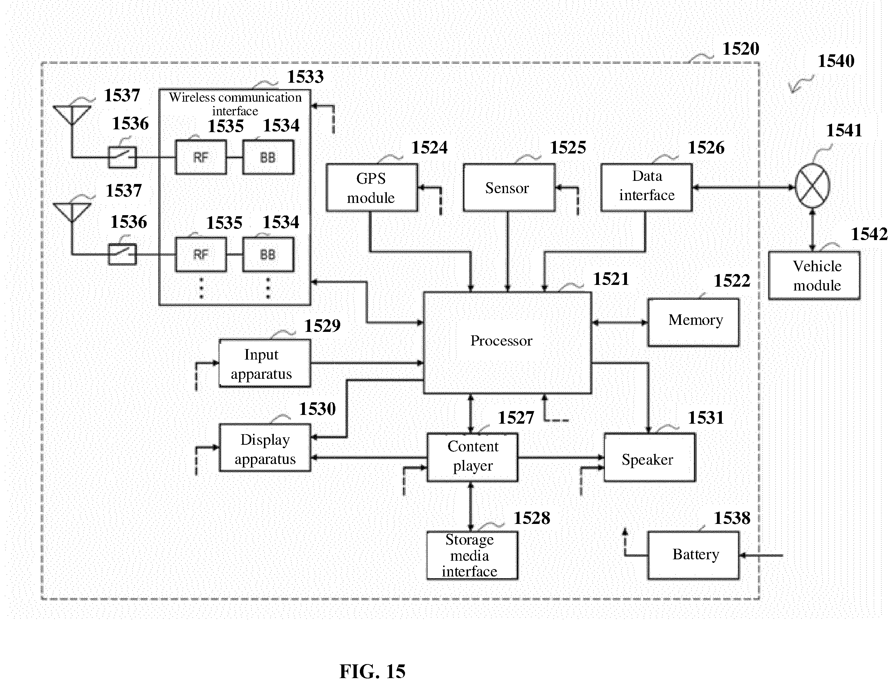

FIG. 15 is a block diagram showing an example of a schematic configuration of a car navigation device 1520 to which the technology of the present disclosure can be applied. The car navigation device 1520 includes a processor 1521, a memory 1522, a global positioning system (GPS) module 1524, a sensor 1525, a data interface 1526, a content player 1527, a storage medium interface 1528, an input apparatus 1529, a display apparatus 1530, a speaker 1531, a wireless communication interface 1533, one or more antenna switches 1536, one or more antennas 1537, and battery 1538. In one implementation, the car navigation device 1520 (or the processor 1521) here may correspond to the above terminal device 103.

The processor 1521 can be, for example, a CPU or a SoC, and controls the navigation function and other functions of the car navigation device 1520. The memory 1522 includes RAM and ROM, and stores data and programs executed by the processor 1521.

The GPS module 1524 uses GPS signals received from GPS satellites to measure the location (such as latitude, longitude, and altitude) of the car navigation device 1520. The sensor 1525 may include a set of sensors such as a gyroscope sensor, a geomagnetic sensor, and an air pressure sensor. The data interface 1526 is connected to, for example, a in-vehicle network 1541 via a terminal not shown, and acquires data (such as vehicle speed data) generated by the vehicle.

The content player 1527 reproduces content stored in storage media (such as CDs and DVDs), which are inserted into the storage media interface 1528. The input apparatus 1529 includes, for example, a touch sensor configured to detect a touch on the screen of the display apparatus 1530, a button, or a switch, and receives operations or information input from a user. The display apparatus 1530 includes a screen such as an LCD or OLED display, and displays images of a navigation function or reproduced content. The speaker 1531 outputs the sound of the navigation function or the reproduced content.

The wireless communication interface 1533 supports any cellular communication scheme (such as LTE and LTE-Advanced), and performs wireless communication. The wireless communication interface 1533 may generally include, for example, BB processor 1534 and RF circuit 1535. The BB processor 1534 may perform, for example, encoding/decoding, modulation/demodulation, and multiplexing/demultiplexing, and perform various types of signal processing for wireless communication. Meanwhile, the RF circuit 1535 may include, for example, a mixer, a filter, and an amplifier, and transmit and receive wireless signals via the antenna 1537. The wireless communication interface 1533 can also be a chip module on which the BB processor 1534 and the RF circuit 1535 are integrated. As shown in FIG. 15, the wireless communication interface 1533 may include multiple BB processors 1534 and multiple RF circuits 1535. Although FIG. 15 illustrates an example in which the wireless communication interface 1533 includes multiple BB processors 1534 and multiple RF circuits 1535, the wireless communication interface 1533 may also include a single BB processor 1534 or a single RF circuit 1535.

Furthermore, in addition to the cellular communication scheme, the wireless communication interface 1533 may support another type of wireless communication scheme, such as a short-range wireless communication scheme, a near field communication scheme, and a wireless LAN scheme. In this case, the wireless communication interface 1533 may include the BB processor 1534 and the RF circuit 1535 for each wireless communication scheme.

Each of the antenna switches 1536 switches the connection destination of the antenna 1537 among a plurality of circuits (such as circuits for different wireless communication schemes) included in the wireless communication interface 1533.

Each of the antennas 1537 includes a single or multiple antenna elements (such as multiple antenna elements included in a MIMO antenna), and is used for the wireless communication interface 1533 to transmit and receive wireless signals. As shown in FIG. 15, the car navigation device 1520 may include multiple antennas 1537. Although FIG. 15 illustrates an example in which the car navigation device 1520 includes multiple antennas 1537, the car navigation device 1520 may also include a single antenna 1537.

Furthermore, the car navigation device 1520 may include an antenna 1537 for each wireless communication scheme. In this case, the antenna switch 1536 may be omitted from the configuration of the car navigation device 1520.

The battery 1538 provides power to various blocks of the car navigation device 1520 shown in FIG. 15 via feeders, which are partially shown as dashed lines in the figure. The battery 1538 accumulates power supplied from the vehicle.

The techniques of this disclosure may also be implemented as an in-vehicle system (or vehicle) 1540 including one or more blocks of the car navigation device 1520, the in-vehicle network 1541, and the vehicle module 1542. The vehicle module 1542 generates vehicle data (such as vehicle speed, engine speed, and fault information), and outputs the generated data to the in-vehicle network 1541.

The exemplary embodiments of the present disclosure have been described above with reference to the drawings, but the present disclosure is not of course limited to the above examples. Those skilled in the art may find various changes and modifications within the scope of the appended claims, and it should be understood that these changes and modifications will naturally fall within the technical scope of the present disclosure.

For example, a plurality of functions included in one unit in the above embodiments may be implemented by separate apparatus. Alternatively, the plurality of functions implemented by multiple units in the above embodiments may be implemented by separate apparatus, respectively. Additionally, one of the above functions may be implemented by multiple units. Needless to say, such a configuration is included in the technical scope of the present disclosure.

In this specification, the steps described in the flowchart include not only processes performed in time sequence in the stated order, but also processes performed in parallel or individually rather than necessarily in time sequence. Furthermore, even in the steps processed in time sequence, needless to say, the order can be appropriately changed.

Although the present disclosure and its advantages have been described in detail, it should be understood that various changes, substitutions and alterations can be made herein without departing from the spirit and scope of the disclosure as defined by the appended claims. Furthermore, the terms "comprise", "include" or any other variation thereof in embodiments of the present disclosure are intended to encompass a non-exclusive inclusion, such that a process, method, article or device comprising a series of elements includes not only those elements, but also include other elements not expressly listed, or include elements inherent to such process, method, article or device. Without further limitation, an element defined by the phrase "comprising one..." does not preclude the presence of additional identical elements in a process, method, article or device that includes the element.

## Claims

1. An electronic device for a first base station, the electronic device comprising a processing circuitry configured to:
detect a first indicator of the first base station;
send first information to a second base station in response to the detected first indicator indicating that the workload of the first base station is lower than a first threshold, wherein the first information includes information for indicating that the first base station requests to sleep; and
receive second information for the first information from the second base station, wherein the second information indicates whether the first base station is allowed to sleep.

2. The electronic device according to claim 1, wherein the second information further comprises a list of one or more neighboring base stations of the first base station.

3. The electronic device according to claim 1 or 2, the processing circuit is further configured to:
in response to receiving the second information and the second information indicating that the first base station is allowed to sleep, notify terminal devices and/or sub-base stations served by the first base station of connecting to one or more neighboring base stations of the first base station.

4. The electronic device according to claim 1 or 2, wherein the second information is based at least on workload status of one or more neighboring base stations of the first base station.

5. The electronic device according to claim 1, the processing circuit is further configured to:
in response to the detected first indicator indicating that the workload of the first base station is higher than a second threshold, send third information to the second base station, wherein the third information includes information for indicating requesting to wake up one or more neighboring base stations of the first base station; and
receive fourth information for the third information from the second base station, wherein the fourth information indicates one or more neighboring base stations to be woken up.

6. The electronic device according to claim 5, the processing circuit is further configured to:
in response to receiving the fourth information, send information about one or more neighboring base stations to be woken up to one or more terminal devices and/or sub-base stations served by the first base station, to enable the one or more terminal devices and/or sub-base stations to connect to at least one neighboring base station.

7. The electronic device according to claim 5, wherein:
the second information is based at least on the workload of one or more neighboring base stations of the first base station is lower than a third threshold, and the second information indicates that the first base station is allowed to sleep; and/or
the fourth information is based at least on sleep states of one or more neighboring base stations of the first base station.

8. The electronic device according to claim 1, wherein the first indicator comprises traffic volume of the first base station and/or power consumption of the first base station.

9. The electronic device according to claim 1, wherein the first base station comprises an Integrated Access and Backhaul (IAB) base station, and the second base station comprises an IAB donor base station.

10. An electronic device for a second base station, the electronic device comprising a processing circuitry configured to:
receive first information from a first base station, wherein the first information is sent by the first base station in response to detecting that a first indicator of the first base station indicates that the workload of the first base station is lower than a first threshold, and wherein the first information includes information for indicating that the first base station requests to sleep; and
send second information for the first information to the first base station, wherein the second information indicates whether the first base station is allowed to sleep.

11. The electronic device according to claim 10, wherein the second information further comprises a list of one or more neighboring base stations of the first base station.

12. The electronic device according to claim 10 or 11, wherein the second information is based at least on the workload status of one or more neighboring base stations of the first base station.

13. The electronic device according to claim 10, the processing circuit is further configured to:
receive third information from the first base station, wherein the third information is sent by the first base station in response to detecting that the first indicator indicates that the workload of the first base station is higher than a second threshold, and wherein the third information includes information for indicating that the first base station requests to wake up one or more neighboring base stations of the first base station; and
send fourth information for the third information to the first base station, wherein the fourth information indicates one or more neighboring base stations to be woken up.

14. The electronic device according to claim 13, wherein:
the second information is based at least on the workload of one or more neighboring base stations of the first base station is lower than a third threshold, and the second information indicates that the first base station is allowed to sleep; and/or
the fourth information is based at least on sleep states of one or more neighboring base stations of the first base station.

15. The electronic device according to claim 10, wherein the first indicator comprises traffic volume of the first base station and/or power consumption of the first base station.

16. The electronic device according to claim 10, wherein the first base station comprises an Integrated Access and Backhaul (IAB) base station and the second base station comprises an IAB donor base station.

17. A method for a first base station, the method comprising:
detecting a first indicator of a first base station;
in response to the detected first indicator indicating that the workload of the first base station is lower than a first threshold, sending first information to a second base station, wherein the first information includes information for indicating that the first base station requests to sleep; and
receiving second information for the first information from the second base station, wherein the second information indicates whether the first base station is allowed to sleep.

18. A method for a second base station, the method comprising:
receiving first information from a first base station, wherein the first information is sent by the first base station in response to detecting that a first indicator of the first base station indicates that the workload of the first base station is lower than a first threshold, and wherein the first information includes information for indicating that the first base station requests to sleep; and
sending second information for the first information to the first base station, wherein the second information indicates whether the first base station is allowed to sleep.

19. A computer-readable storage medium storing one or more instructions which, when executed by one or more processors of an electronic device, cause the electronic device to perform the method according to claim 17 or 18.

20. An apparatus for wireless communication, comprising unit for performing the method according to claim 17 or 18.
